(19) Europäisches Patentamt
European Patent Office
Office européen des brevets

(11) **EP 3 936 328 B1**

(12) **EUROPEAN PATENT SPECIFICATION**

(45) Date of publication and mention of the grant of the patent:
**06.08.2025 Bulletin 2025/32**

(21) Application number: **20766226.3**

(22) Date of filing: **13.02.2020**

(51) International Patent Classification (IPC):
*C09J 7/21* (2018.01)        *C09J 7/38* (2018.01)
*C09J 153/02* (2006.01)      *B32B 5/02* (2006.01)
*B32B 27/00* (2006.01)       *B32B 27/12* (2006.01)
*B32B 27/30* (2006.01)

(52) Cooperative Patent Classification (CPC):
**C09J 7/21; B32B 5/022; B32B 5/024; B32B 5/026; B32B 5/028; B32B 27/12; B32B 27/302; C09J 7/387; C09J 153/02;** B32B 2262/0223; B32B 2262/0253; B32B 2262/0261; B32B 2262/0276; B32B 2262/0292; B32B 2262/04;
(Cont.)

(86) International application number:
**PCT/JP2020/005532**

(87) International publication number:
**WO 2020/179393 (10.09.2020 Gazette 2020/37)**

(54) **PRESSURE-SENSITIVE ADHESIVE SHEET**

HAFTKLEBEFOLIE

FEUILLE ADHÉSIVE SENSIBLE À LA PRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.03.2019 JP 2019041005**

(43) Date of publication of application:
**12.01.2022 Bulletin 2022/02**

(73) Proprietor: **Nitto Denko Corporation**
**Ibaraki-shi, Osaka 567-8680 (JP)**

(72) Inventors:
• **SAWAMURA, Amane**
**Ibaraki-shi, Osaka 567-8680 (JP)**
• **OKAHARA, Kai**
**Ibaraki-shi, Osaka 567-8680 (JP)**
• **YAMAMOTO, Shuuhei**
**Ibaraki-shi, Osaka 567-8680 (JP)**

(74) Representative: **Müller-Boré & Partner Patentanwälte PartG mbB**
**Friedenheimer Brücke 21**
**80639 München (DE)**

(56) References cited:
**EP-A1- 2 848 665        EP-A1- 2 913 373**
**WO-A1-2017/038307        JP-A- 2013 216 852**
**JP-A- 2015 078 348        US-A1- 2014 213 716**

(52) Cooperative Patent Classification (CPC): (Cont.)
B32B 2262/062; B32B 2262/065; B32B 2262/067;
B32B 2262/08; B32B 2307/51; B32B 2307/748;
B32B 2405/00; C09J 2400/263; C09J 2453/00

## EP 3 936 328 B1

**Description**

The present invention relates to a pressure-sensitive adhesive sheet.

In general, pressure-sensitive adhesive (PSA) exists as a soft solid (a viscoelastic material) in a room temperature range and has a property to adhere easily to an adherend with some pressure applied. Taking advantage of such a property, PSA has been widely used as a means of attachment that works efficiently and produces dependable adhesion in various industrial fields such as home appliances to automobiles and OA equipment. A typical composition of PSA comprises a polymer that shows rubberlike elasticity at room temperature as the base polymer. Patent Document 1 is a technical document related to PSA sheets. In this context, Patent Document 2 describes a PSA composition and a PSA sheet, Patent Documents 3 and 4 disclose a PSA composition comprising a block copolymer of a monovinyl-substituted aromatic compound and a conjugated diene compound, as well as a PSA sheet, and Patent Document 5 relates to a PSA sheet comprising a PSA layer comprising a block copolymer of a monovinyl-substituted aromatic compound and a conjugated diene compound.

[Patent Document 1] Japanese Patent Application Publication No. 2015-78348
[Patent Document 2] European Patent Application EP 2 913 373 A1
[Patent Document 3] US Patent Application US 2014/213716 A1
[Patent Document 4] Japanese Patent Application JP 2013 216852 A
[Patent Document 5] European Patent Application EP 2 848 665 A1

Some applications of PSA sheets require high peel strength to both smooth and rough surfaces. In one example of such applications, a smooth surface of an adherend is tightly bonded with a rough surface of the adherend or of another adherend. Recently, from the standpoint of effective utilization of resources, greater productivity, etc., there is a demand for a PSA sheet not only capable of tightly bonding smooth and rough surfaces together, but also capable of being removed from the smooth surface as necessary.

On the other hand, a PSA sheet having a PSA layer laminated on a fabric sheet such as nonwoven fabric can be preferably used in case where the PSA sheet is applied to a non-flat surface (e.g. a curved or uneven surface), in case not desired to have a decrease in adherend flexibility or deformability caused by application of the PSA sheet, etc. However, it has been difficult to obtain a PSA sheet that tightly bonds to both smooth and rough surfaces while having great removability from the smooth surface (e.g. with less residue of the PSA sheet left on the smooth surface).

An objective of this invention is thus to provide a PSA sheet that has a PSA layer laminated on a fabric sheet and that tightly bonds to both smooth and rough surfaces while showing great removability from the smooth surface. Another related objective is to provide an adhesive member having such a PSA sheet bonded with a rough surface.

The PSA sheet provided by this Description comprises a fabric sheet and a PSA layer laminated on the fabric sheet. The PSA layer comprises a base polymer and a tackifier resin. The base polymer is a block copolymer of a monovinyl-substituted aromatic compound and a conjugated diene compound. The tackifier resin comprises a tackifier resin having a softening point below 120 °C and a tackifier resin having a softening point of 120°C or higher. The PSA layer has a thickness greater than 100 $\mu$m and less than 190 $\mu$m and the fabric sheet has a thickness of 15 $\mu$m or greater and 50 $\mu$m or less as well as a bulk density of 0.25 g/cm$^3$ or higher and 0.50 g/cm$^3$ or lower. Such an embodiment can favorably bring about a PSA sheet that tightly bonds to both smooth and rough surfaces and also shows great removability from the smooth surface.

The PSA sheet disclosed herein is preferably formed as a double-faced PSA sheet comprising a first PSA layer that is the PSA layer laminated on a first face of the fabric sheet and a second PSA layer that is the PSA layer laminated on a second face of the fabric sheet. The PSA sheet in such an embodiment can be preferably used for bonding a smooth surface (e.g. a surface having a surface roughness Sz less than 100 $\mu$m) and a rough surface (e.g. a surface having a surface roughness Sz of 200 $\mu$m to 1000 $\mu$m) together.

In a preferable embodiment of the PSA sheet disclosed herein, the PSA sheet can be used for fixing a porous sheet (brush cloth) to a core of a brush roll of a vacuum cleaner. In another preferable embodiment, the PSA sheet disclosed herein can be used, for instance, for fixing the backside of a hook-and-loop faster to an attachment target.

This Description provides an adhesive member comprising a double-faced PSA sheet that has first and second PSA layers laminated on first and second faces of a fabric sheet, respectively, and further comprising a sheet member that has a rough surface having a surface roughness Sz of 200 $\mu$m to 1000 $\mu$m, with the second PSA layer of the PSA sheet bonded with the rough surface. Each of the first and second PSA layers can be a PSA layer disclosed herein. The adhesive member has a 180° peel strength of 25 N/20mm or greater, determined by applying the first PSA layer of the PSA sheet to an acrylonitrile butadiene styrene copolymer resin (ABS) plate. According to such an adhesive member, a sheet member can be tightly yet removably fixed to an adherend.

Fig. 1 shows a schematic cross-sectional view of the constitution of the PSA sheet according to an embodiment.

Fig. 2 shows a schematic cross-sectional view illustrating the adhesive member according to an embodiment.

Preferred embodiments of the present invention are described below. Matters necessary to practice this invention other than those specifically referred to in this description may be understood by an ordinarily-skilled person in the art based on the embodiments taught in the present description and the common technical knowledge at the time of filing. The present invention can be practiced based on the content disclosed in this description and common technical knowledge in the subject field. In the drawings referenced below, a common reference numeral may be assigned to members or sites producing the same effects, and duplicated descriptions are sometimes omitted or simplified. The embodiments described in the drawings are schematized for clear illustration of the present invention, and do not necessarily represent accurate sizes or reduction scales of products actually provided.

As used herein, the term "PSA" refers to, as described earlier, a material that exists as a soft solid (a viscoelastic material) in a room temperature range and has a property to adhere easily to an adherend with some pressure applied. As defined in "Adhesion : Fundamental and Practice" by C. A. Dahlquist (McLaren & Sons (1966), P. 143), PSA referred to herein can be a material that has a property satisfying complex tensile modulus $E^*$ (1Hz) < $10^7$ dyne/cm$^2$ (typically, a material that exhibits the described characteristics at 25 °C).

As used herein, the "base polymer" of a PSA refers to the primary component among rubbery polymers (polymers that exhibit rubber elasticity in a room temperature range) contained in the PSA, typically, a component accounting for more than 50 % by weight of all rubbery polymers.

As used herein, "block copolymer of a monovinyl-substituted aromatic compound and a conjugated diene compound" refers to a polymer comprising at least one each of a segment (segment A) that comprises a monovinyl-substituted aromatic compound as a primary monomer (which refers to a copolymer component accounting for more than 50 % by weight; the same applies hereinafter) and a segment (segment B) that comprises a conjugated diene compound as a primary monomer. In general, the glass transition temperature of segment A is higher than that of segment B. Examples of a typical constitution of such a polymer include an ABA triblock copolymer having a triblock structure where segment A (hard segment) is placed at each terminal of segment B (soft segment), and an AB diblock copolymer having a diblock structure comprising one segment A and one segment B.

As used herein, "styrene-based block copolymer" refers to a polymer comprising at least one styrene block. The "styrene block" refers to a segment comprising styrene as a primary monomer. A typical example of a styrene block referred to herein is a segment consisting essentially of styrene. "Styrene-isoprene block copolymer" refers to a polymer comprising at least one styrene block and at least one isoprene block (a segment comprising isoprene as a primary monomer). Typical examples of a styrene-isoprene block copolymer include a triblock copolymer having a triblock structure where a styrene block (hard segment) is placed at each terminal of an isoprene block (soft segment), and a diblock copolymer having a diblock structure comprising one isoprene block and one styrene block. "Styrene-butadiene block copolymer" refers to a polymer comprising at least one styrene block and at least one butadiene block (a segment comprising butadiene as a primary monomer).

As used herein, "the styrene content" in a styrene-based block copolymer refers to the weight fraction of styrene residue contained in the total weight of the block copolymer. The styrene content can be measured by NMR (nuclear magnetic resonance spectroscopy).

The diblock content (which hereinafter may be referred to as the "diblock fraction" or "diblock ratio") in a styrene-based block copolymer can be determined by the following method. That is, a given styrene-based block copolymer is dissolved in tetrahydrofuran (THF) and subjected to high-performance liquid chromatography at a temperature of 40 °C with the THF as the mobile phase passing at a flow rate of 1 mL/min through four linearly connected columns consisting of two each of liquid chromatography columns GS5000H and G4000H both available from Tosoh Corporation; from the resulting chromatogram, the area of the peak corresponding to the diblock copolymer is determined; and the diblock fraction is determined as the percentage of the area of the peak corresponding to the diblock relative to the total area of all peaks.

<Examples of constitution of PSA sheet>

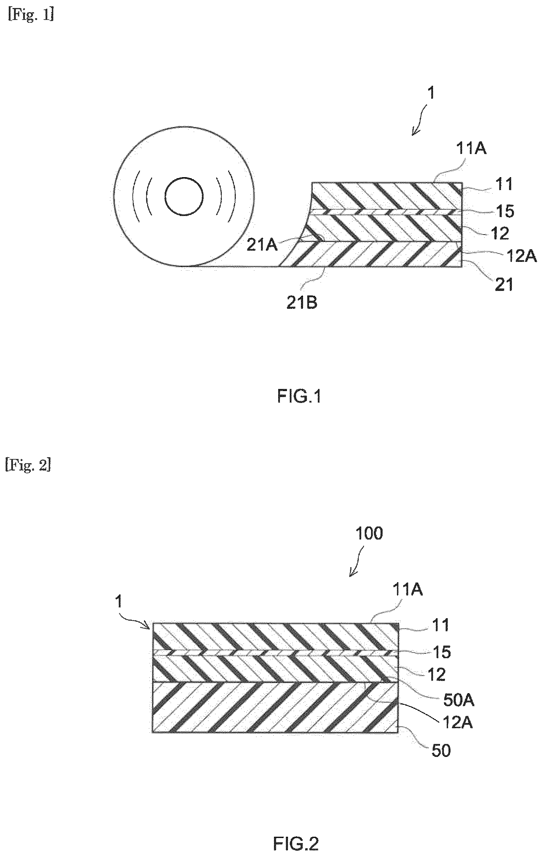

The PSA sheet disclosed herein (which can be a long sheet such as tape, etc.) may have, for example, a form of an adhesively double-faced PSA sheet having the cross-sectional structure schematically shown in Fig. 1. A double-faced PSA sheet 1 comprises a fabric sheet 15 as well as the first and second PSA layers 11 and 12 laminated on the first and second face sides of fabric sheet 15, respectively. Prior to use (before adhered to an adherend), as shown in Fig. 1, double-faced PSA sheet 1 can be in a roll wherein PSA sheet 1 is wound along with release liner 21 having front face (release face) 21A and back face (release face) 21B. In double-faced PSA sheet 1 in such an embodiment, the surface (second adhesive face 12A) of second PSA layer 12 and the surface (first adhesive face 11A) of first PSA layer 11 are protected with front face 21A and back face 21B of release liner 21, respectively. Alternatively, it may be in an embodiment where first adhesive face 11A and second adhesive face 12A are protected with two separate release liners, respectively.

The PSA sheet disclosed herein may also be a single-faced PSA sheet having a fabric sheet and a PSA layer laminated on the first face side thereof and being free of a PSA layer on the second face side of the fabric sheet.

In the art disclosed herein, there are no limitations to the release liner, and any conventional release paper or the like can be used. For example, the following can be used: a release liner having a release layer on a surface of a substrate such as a plastic film and a sheet of paper; a release liner formed from a poorly-adhesive material such as a fluorine-based polymer (polytetrafluoroethylene, etc.) and a polyolefin-based resin (polyethylene, polypropylene, etc.). The release layer can be formed, for instance, by processing the surface of the substrate with a release agent such as a silicone-based, a long-chain alkyl-based, a fluorine-based, and a molybdenum disulfide-based release agent.

<Fabric sheet>

The PSA sheet disclosed herein is in an embodiment where a PSA layer is laminated on a fabric sheet. As the fabric sheet, it is possible to use the sorts of woven and nonwoven fabrics, knits, and nets of single or blended spinning of various fibrous substances, etc. Here, the concept of nonwoven fabric encompasses a nonwoven fabric fabricated using a general paper machine, for instance, the sort of paper such as Japanese paper (Washi) and high-grade paper. The concept of nonwoven fabric includes felt. Examples of the fibrous substances constituting the fabric sheet include natural fibers and chemical fibers (synthetic fibers) as those described later as well as inorganic fibers such as glass fiber and carbon fiber, and metal fibers. Two or more materially different fibrous substances can be used together as well. The fabric sheet can also be thought as a support substrate supporting the PSA layer.

The fabric sheet has a thickness of 15 $\mu$m or greater; and 50 $\mu$m or less. The fabric sheet has a bulk density of 0.25 g/cm$^3$ or higher ; and 0.50 g/cm$^3$ or lower .

According to the present invention, as the fabric sheet, a species is used having a thickness of 15 $\mu$m or greater and 50 $\mu$m or less. Also a species is used having a bulk density of 0.25 g/cm$^3$ or higher and 0.50 g/cm$^3$ or lower. The PSA sheet disclosed herein is made, using a fabric sheet having a thickness of 15 $\mu$m or greater and 50 $\mu$m or less as well as a bulk density of 0.25 g/cm$^3$ or higher and 0.50 g/cm$^3$ or lower. According to the fabric sheet satisfying the thickness and the bulk density, it is possible to obtain a PSA sheet that shows a high peel strength to an adherend. The reason for this should not be interpreted with particular limitations; however, it is thought that while the PSA layer is reinforced when the fabric sheet is impregnated with PSA, the PSA serves as a binder for the fibers constituting the fabric sheet to enhance the strength of the fabric sheet and prevent the PSA sheet from peeling in a way that it ruptures within the thickness of the fabric sheet (or "rupture-peeling" hereinafter), whereby a high peel strength is obtained. When the fabric sheet has a thickness of 50 $\mu$m or less and a bulk density of 0.50 g/cm$^3$ or less, PSA is readily impregnated into the interior of the fabric sheet to facilitate inhibition of the rupture-peeling. When the fabric sheet has a thickness of 15 $\mu$m or greater and a bulk density of 0.25 g/cm$^3$ or higher, excessive lowering of strength of the fabric sheet itself can be avoided.

In some embodiments, the fabric sheet may have a thickness less than 50 $\mu$m, less than 40 $\mu$m, less than 30 $\mu$m, less than 25 $\mu$m, or even less than 20 $\mu$m. A smaller thickness of the fabric sheet facilitates impregnation of PSA into the interior of the fabric sheet. The PSA sheet disclosed herein can also be preferably made in an embodiment using a fabric sheet having a thickness of 35 $\mu$m or greater and 50 $\mu$m or less, 45 $\mu$m or greater and 50 $\mu$m or less, or 45 $\mu$m or greater and less than 50 $\mu$m. A larger thickness of the fabric sheet within these ranges can achieve both strength enhancement of the fabric sheet itself and PSA impregnation into the fabric sheet's interior in a good balance.

In some embodiments, the bulk density of the fabric sheet is possibly, for instance, 0.27 g/cm$^3$ or higher, or typically preferably 0.30 g/cm$^3$ or higher. In a preferable embodiment, it is preferable to use a fabric sheet having a bulk density of higher than 0.35 g/cm$^3$ and 0.50 g/cm$^3$ or lower. It may be useful to have a fabric sheet's bulk density above 0.35 g/cm$^3$ in preventing scarce PSA impregnation due to excessive crushing of the fabric sheet facilitated in the thickness direction during fabrication of the PSA sheet and in obtaining a PSA sheet with PSA well impregnated into the fabric sheet.

The grammage (weight per unit area) of the fabric sheet is not particularly limited. In some embodiments, the fabric sheet may have a grammage of, for instance, about 1.0 g/m$^2$ to 100 g/m$^2$ (preferably about 3.0 g/m$^2$ to 50 g/m$^2$). In some embodiments, the fabric sheet has a grammage of, for instance, possibly 3.8 g/m$^2$ or greater and 25 g/m$^2$ or less, or preferably 4.5 g/m$^2$ or greater and 25 g/m$^2$ or less. The PSA sheet disclosed herein can be favorably made, using a fabric sheet having a grammage in these ranges.

In a preferable embodiment of the PSA sheet disclosed herein, as the fabric sheet, it is preferable to use a species having a thickness of 30 $\mu$m to 50 $\mu$m, e.g. 45 $\mu$m to 50 $\mu$m, a bulk density of higher than 0.35 g/cm$^3$ and 0.50 g/cm$^3$ or lower, more preferably 0.40 g/cm$^3$ to 0.50 g/cm$^3$, e.g. 0.45 g/cm$^3$ to 0.50 g/cm$^3$), and a grammage of 15 g/m$^2$ or greater and 25g/m$^2$ or less (preferably 18 g/m$^2$ or greater and 25 g/m$^2$ or less, e.g. 21 g/m$^2$ or greater and 25 g/m$^2$ or less). An embodiment where the PSA layer described later is laminated on such a fabric sheet (e.g. nonwoven fabric) can favorably bring about a PSA sheet exhibiting a high peel strength to an adherend. In such an embodiment, the thickness of the PSA sheet is suitably about 4.0 times to 8.0 times greater than the thickness of the fabric sheet, or preferably about 4.5 times to 6.5 times greater.

In another preferable embodiment of the PSA sheet disclosed herein, as the fabric sheet, it is preferable to use a species having a thickness of 15 $\mu$m to 25 $\mu$m, e.g. 15 $\mu$m to 20 $\mu$m, a bulk density of higher than 0.35 g/cm$^3$ and 0.50 g/cm$^3$

or lower, more preferably higher than 0.35 g/cm$^3$ and 0.40 g/cm$^3$ or lower), and a grammage of less than 10 g/m$^2$ (typically 4.5 g/m$^2$ or greater and less than 10 g/m$^2$, preferably 5.0 g/m$^2$ or greater and less than 10 g/m$^2$, e.g. 5.0 g/m$^2$ or greater and less than 8.00 g/m$^2$). An embodiment where the PSA layer described later is laminated on such a fabric sheet (e.g. nonwoven fabric) can favorably bring about a PSA sheet exhibiting a high peel strength to an adherend. In such an embodiment, the thickness of the PSA sheet is suitably about 10 times to 30 times greater than the thickness of the fabric sheet, preferably about 12 times to 25 times greater, or more preferably about 15 times to 20 times greater.

In some embodiments of the PSA sheet disclosed herein, as the fabric sheet, a nonwoven fabric can be preferably used. Examples of usable nonwoven fabrics include nonwoven fabrics formed from natural fibers such as pulp including wood pulp and hemp pulp, cotton, hemp (e.g. Manilla hemp), wool and silk; nonwoven fabrics formed from chemical fibers (synthetic fibers) such as polyester fibers including polyethylene terephthalate (PET) fiber, rayon, vinylon, acetate fiber, polyvinyl alcohol (PVA) fiber, polyamide fiber, polyolefin fiber and polyurethane fiber; and nonwoven fabrics formed using two or more materially different fibers together. Among them, from the standpoint of the strength and the ease of PSA impregnation, preferable are nonwoven fabrics whose constituent fibers are paper pulp such as wood pulp and hemp pulp (e.g. hemp pulp formed from Manilla hemp), nonwoven fabrics formed from wool, nonwoven fabrics formed from PET fabric, and the like.

Besides these fibrous substances, the fabric sheet (e.g. nonwoven fabric) may include a resin component (typically in a non-fibrous form) such as starch (e.g. cationized starch), polyacrylamide, viscose, polyvinyl alcohol, urea formaldehyde resin, melamine formaldehyde resin and polyamide polyamine epichlorohydrin. The resin component may serve as a paper strengthening agent for nonwoven fabrics. Such a resin component used as necessary can help adjust the strength of the fabric sheet and the ease of PSA impregnation into the fabric sheet. The fabric sheet in the art disclosed herein may include as necessary other additives generally known in fields related to manufacturing of fabric sheets (e.g. nonwoven fabrics), such as a yield enhancer, water filtering agent, viscosity adjusting agent and dispersant.

<PSA layer>

(Base polymer)

The PSA layer disclosed herein comprises as a base polymer a block copolymer of a monovinyl-substituted aromatic compound and a conjugated diene compound. The monovinyl-substituted aromatic compound refers to a compound in which a functional group containing a vinyl group is bonded to an aromatic ring. Typical examples of the aromatic ring include a benzene ring (which can be a benzene ring substituted with a functional group (e.g., an alkyl group) containing no vinyl groups). Examples of the monovinyl-substituted aromatic compound include styrene, α-methyl styrene, vinyl toluene, and vinyl xylene. Examples of the conjugated diene compound include 1,3-butadiene, and isoprene. Among such block copolymers, one species can be used solely, or two or more species can be used together as the base polymer.

Segment A (hard segment) in the block copolymer comprises the monovinyl-substituted aromatic compound (for which, two or more species can be used together) at a copolymerization ratio of preferably 70 % by weight or greater (more preferably 90 % by weight or greater, or it can be essentially 100 % by weight). Segment B (soft segment) in the block copolymer comprises the conjugated diene compound (for which, two or more species can be used) at a copolymerization ratio of preferably 70 % by weight or greater (more preferably 90 % by weight or greater, or it can be essentially 100 % by weight). According to such a block copolymer, a PSA sheet of higher performance can be obtained.

The block copolymer may be a diblock copolymer, a triblock copolymer, a radial copolymer, a mixture of these, or the like. In a triblock copolymer or a radial copolymer, it is preferable that segment A (e.g., a styrene block) is placed at a terminal of the polymer chain. Segment A placed terminally on the polymer chain is likely to aggregate to form a domain, whereby pseudo crosslinks are formed, resulting in increased cohesive strength of the PSA.

In the art disclosed herein, from the standpoint of the adhesive strength (peel strength) to an adherend, a preferable block copolymer has a diblock fraction of 30 % by weight or greater (more preferably 40 % by weight or greater, even more preferably 50 % by weight or greater, or especially preferably 60 % by weight or greater, typically 65 % by weight or greater). From the standpoint of the peel strength, a particularly preferable block copolymer has a diblock fraction of 70 % by weight or greater. From the standpoint of the cohesive strength, etc., can be used a block copolymer having a diblock fraction of preferably 90 % by weight or smaller (more preferably 85 % by weight or smaller, e.g. 80 % by weight or smaller). For instance, a preferable block copolymer has a diblock fraction of 60 to 85 % by weight, or more preferably 70 to 85 % by weight (e.g. 70 to 80 % by weight).

In a preferable embodiment of the art disclosed herein, the base polymer is a styrene-based block copolymer. For instance, an embodiment wherein the base polymer comprises at least one of a styrene-isoprene block copolymer and a styrene-butadiene block copolymer is preferable. It is preferable that the styrene-based block copolymer contained in the PSA comprises either a styrene-isoprene block copolymer at a ratio of 70 % by weight or greater, a styrene-butadiene block copolymer at a ratio of 70 % by weight or greater, or a styrene-isoprene block copolymer and a styrene-butadiene block copolymer at a combined ratio of 70 % by weight or greater. In a preferable embodiment, essentially all (e.g., 95 to 100 % by weight) of the styrene-based block copolymer is a styrene-isoprene block copolymer. In another preferable embodiment, essentially all (e.g., 95 to 100 % by weight) of the styrene-based block copolymer is a styrene-butadiene block copolymer. According to such compositions, greater effects may be obtained by applying the art disclosed herein.

The styrene-based block copolymer can be a diblock copolymer, a triblock copolymer, a radial copolymer, a mixture of these, or the like. In a triblock copolymer and a radial copolymer, it is preferable that a styrene block is placed at a terminal of the polymer chain. The styrene block placed terminally on the polymer chain is likely to aggregate to form a styrene domain, whereby pseudo crosslinks are formed, resulting in increased cohesive strength of the PSA. In the art disclosed herein, from the standpoint of the adhesive strength (peel strength) to an adherend, a preferable styrene-based block copolymer has a diblock fraction of 30 % by weight or greater (more preferably 40 % by weight or greater, even more preferably 50 % by weight or greater, or especially preferably 60 % by weight or greater, typically 65 % by weight or greater). The styrene-based block copolymer may have a diblock fraction of 70 % by weight or greater (e.g., 75 % by weight or greater). From the standpoint of the cohesive strength, etc., a preferable styrene-based block copolymer has a diblock fraction of 90 % by weight or smaller (more preferably 85 % by weight or smaller, e.g. 80 % by weight or smaller). From the standpoint of combining well-balanced cohesion and low temperature repulsion resistance by applying the art disclosed herein, the styrene-based block copolymer has a diblock fraction of preferably 60 to 85 % by weight or more preferably 70 to 85 % by weight (e.g. 70 to 80 % by weight).

The styrene content in the styrene-based block copolymer can be, for instance, 5 to 40 % by weight. From the standpoint of the cohesive strength, it is typically preferable that the styrene content is 10 % by weight or greater (more preferably greater than 10 % by weight, e.g., 12 % by weight or greater). From the standpoint of the peel strength, the styrene content is preferably 35 % by weight or less (typically 30 % by weight or less, or more preferably 25 % by weight or less) or particularly preferably 20 % by weight or less (typically, less than 20 % by weight, e.g. 18 % by weight or less). From the standpoint of obtaining greater effects by applying the art disclosed herein, can be preferably used a styrene-based block copolymer having a styrene content of 12 % by weight or greater and less than 20 % by weight.

(Tackifier resin)

The PSA layer disclosed herein comprises a tackifier resin in addition to the base polymer. A preferable PSA layer comprises, as the tackifier resin, a tackifier resin having a softening point below 120 °C and a tackifier resin having a softening point of 120°C or higher.

The softening point of a tackifier resin referred to herein is defined as a value measured based on the softening point test method (ring and ball method) specified in JIS K5902 and JIS K2207. In particular, a sample is quickly melted at a lowest possible temperature, and with caution to avoid bubble formation, the melted sample is poured into a ring to the top, with the ring being placed on top of a flat metal plate. After cooled, any portion of the sample risen above the plane including the upper rim of the ring is sliced off with a small knife that has been somewhat heated. Following this, a support (ring support) is placed in a glass container (heating bath) having a diameter of 85 mm or larger and a height of 127 mm or larger, and glycerin is poured into this to a depth of 90 mm or deeper. Then, a steel ball (9.5 mm diameter, weighing 3.5 g) and the ring filled with the sample are immersed in the glycerin while preventing them from touching each other, and the temperature of glycerin is maintained at 20 °C ± 5 °C for 15 minutes. The steel ball is then placed at the center of the surface of the sample in the ring, and this is placed on a prescribed location of the support. While keeping the distance between the ring top and the glycerin surface at 50 mm, a thermometer is placed so that the center of the mercury ball of the thermometer is as high as the center of the ring, and the container is heated evenly by projecting a Bunsen burner flame at the midpoint between the center and the rim of the bottom of the container. After the temperature has reached 40°C from the start of heating, the rate of the bath temperature rise must be kept at 5 °C ± 0.5 °C per minute. As the sample gradually softens, the temperature at which the sample flows out of the ring and finally touches the bottom plate is read as the softening point. Two or more measurements of softening point are performed at the same time, and their average value is used.

As the tackifier resin having a softening point below 120 °C and the tackifier resin having a softening point of 120°C or higher, species having softening points satisfying the conditions can be independently suitably selected and used among various known tackifier resins such as petroleum resins, styrene-based resins, coumarone-indene resins, terpene resins, modified terpene resins, rosin-based resins, rosin derivative resins, and ketone-based resins.

Examples of petroleum resins include aliphatic (C5-based) petroleum resins, aromatic (C9-based) petroleum resins, aliphatic/aromatic copolymer (C5/C9-based) petroleum resins, and hydrogenated products of these (e.g. alicyclic petroleum resins obtainable by hydrogenating aromatic petroleum resins).

Examples of styrene-based resins include a resin comprising a styrene homopolymer as a primary component, a resin comprising an α-methylstyrene homopolymer as a primary component, a resin comprising a vinyltoluene homopolymer as a primary component, and a resin comprising as a primary component a copolymer having a monomer composition that includes two or more species among styrene, α-methylstyrene and vinyltoluene (e.g. an α-methylstyrene/styrene copolymer resin comprising an α-methylstyrene/styrene copolymer as a primary component).

As a coumarone-indene resin, can be used a resin comprising coumarone and indene as monomers constituting the backbone (main chain) of the resin. Examples of monomers that can be contained in the resin backbone other than coumarone and indene include styrene, α-methylstyrene, methylindene, and vinyltoluene.

Examples of terpene resins include poly-α-pinene, poly-β-pinene, poly-dipentene, etc. Examples of modified terpene resins include those obtainable from these terpene resins via modifications (phenol modification, styrene modification, hydrogenation, hydrocarbon modification, or the like). Specific examples include terpene phenol resins, styrene-modified terpene resins, and hydrogenated terpene resins.

The "terpene phenol resin" refers to a polymer containing terpene residue and phenol residue, and the scope thereof encompasses both a terpene phenol copolymer resin and a phenol-modified terpene resin, with the former being a copolymer of a terpene and a phenolic compound, and the latter being a phenol-modification product of a terpene homopolymer or a terpene copolymer (a terpene resin, typically an unmodified terpene resin). Preferable examples of a terpene constituting the terpene phenol resin include mono-terpenes such as α-pinene, β-pinene, and limonene (including *d*-limonene, *l*-limonene, and *d*/*l*-limonene (dipentene)).

Examples of rosin-based resins include unmodified rosins (raw rosins) such as gum rosin, wood rosin, tall-oil rosin, etc.; and modified rosins obtainable from these unmodified rosins via a modification such as hydrogenation, disproportionation, and polymerization (hydrogenated rosins, disproportionated rosins, polymerized rosins, other chemically-modified rosins, etc.). Examples of rosin-derived resins include rosin esters such as unmodified rosins esterified with alcohols (i.e., esterification products of unmodified rosins) and modified rosins (hydrogenated rosins, disproportionated rosins, polymerized rosins, etc.) esterified with alcohols (i.e., esterification products of modified rosins); unsaturated fatty-acid-modified rosins obtainable from unmodified rosins and modified rosins (hydrogenated rosin, disproportionated rosin, polymerized rosin, etc.) via modifications with unsaturated fatty acids; unsaturated fatty-acid-modified rosin esters obtainable from rosin esters via modifications with unsaturated fatty acids; rosin alcohols obtainable via reduction of carboxyl groups from unmodified rosins, modified rosins (hydrogenated rosins, disproportionated rosins, polymerized rosin, etc.), unsaturated fatty-acid-modified rosins or unsaturated fatty-acid-modified rosin esters; metal salts of rosins including unmodified rosins, modified rosins, and various rosin derivatives (in particular, metal salts of rosin esters); rosin phenol resins obtainable from rosins (unmodified rosins, modified rosins, various rosin derivatives, etc.) via addition of phenol in the presence of an acid catalyst followed by thermal polymerization.

In a preferable embodiment, the PSA layer comprises one, two or more species of terpene phenol resin. For instance, of the total tackifier resin content, the ratio of terpene phenol resin may be, for instance, 15 % by weight or higher, preferably 25 % by weight or higher, 30 % by weight or higher, or even 35 % by weight or higher. In some embodiments, the ratio can be 45 % by weight or higher, or even 55 % by weight or higher. Of the total tackifier resin content, the ratio of terpene phenol resin can be, for instance, 90 % by weight or lower, preferably 80 % by weight or lower, 70 % by weight or lower, 60 % by weight or lower, or even 50 % by weight or lower.

When the PSA layer comprises a terpene phenol resin as the tackifier resin, the terpene phenol resin content is, to 100 parts by weight of the base polymer, suitably 5 parts by weight or more, preferably 10 parts by weight or more (e.g. more than 10 parts by weight), or more preferably 15 parts by weight or more. The terpene phenol resin content is, to 100 parts by weight of the base polymer, suitably 70 parts by weight or less, preferably 60 parts by weight or less, or more preferably 50 parts by weight or less.

(Tackifier resin $T_H$)

In the art disclosed herein, the tackifier resin comprises a tackifier resin having a softening point of 120 °C or higher (which may be referred to as a "tackifier resin $T_H$") as the tackifier resin. From the standpoint of the repulsion resistance and cohesion at high temperatures, the softening point of tackifier resin $T_H$ is preferably 125 °C or higher, more preferably 130 °C or higher, or yet more preferably 135 °C or higher (e.g. 140 °C or higher). From the standpoint of the peel strength to an adherend, etc., the softening point of tackifier resin $T_H$ is typically suitably 200 °C or lower, preferably 180 °C or lower, or more preferably 170 °C or lower (e.g. 160 °C or lower).

As the tackifier resin $T_H$, one, two or more species can be used among the aforementioned petroleum resins, styrene-based resins, coumarone-indene resins, modified terpene resins, rosin-based resins, rosin derivative resins, ketone-based resins, etc. Among them, terpene phenol resins, rosin phenol resins, polymerized rosins and polymerized rosin esters are preferable.

In a preferable embodiment, one, two or more species of terpene phenol resin are used as the tackifier resin $T_H$. The softening point of the terpene phenol resin for use may be, for instance, 125 °C or higher. From the standpoint of the heat resistance, cohesion, etc., it is preferably 130 °C or higher, possibly 135 °C or higher, or even 140 °C or higher. The softening point of the terpene phenol resin may be, for instance, 200 °C or lower. From the standpoint of the adhesive strength, miscibility, etc., it is preferably 180 °C or lower, possibly 170 °C or lower, or even 160 °C or lower.

In some embodiments, the terpene phenol resin can account for 25 % by weight or more (preferably 30 % by weight or more, more preferably 50 % by weight or more, e.g. 60 % by weight or more) of the tackifier resin $T_H$. The terpene phenol resin content of the tackifier resin $T_H$ can be, for instance, about 85 % by weight or less, or even about 75 % by weight or less. Alternatively, in some embodiments, the terpene phenol resin content of the tackifier resin $T_H$ can be, for instance, 70 % by weight or greater, 80 % by weight or greater, or even 90 % by weight or greater. The terpene phenol resin may account for essentially all (e.g. 95 % to 100 % by weight, or even 99 % to 100 % by weight) of the tackifier resin $T_H$.

The art disclosed herein can be preferably implemented, for instance, in an embodiment that comprises a tackifier resin $T_H$ having a hydroxyl value of 80 mgKOH/g or greater (e.g. 90 mgKOH/g or greater) as the tackifier resin $T_H$. Hereinafter, a tackifier resin $T_H$ having a hydroxyl value of 80 mgKOH/g or greater may be referred to as a "tackifier resin $T_{HO1}$." The hydroxyl value of the tackifier resin $T_{HO1}$ is typically 200 mgKOH/g or less, or preferably 180 mgKOH/g or less, for instance, 160 mgKOH/g or less. PSA comprising a tackifier resin $T_{HO1}$ can bring about a PSA sheet that provides higher performance. For instance, the resulting PSA sheet may combine cohesion and other properties (e.g. low-temperature repulsion resistance, etc.) at a higher level.

Here, as the hydroxyl value of a tackifier resin in the present description, a value measured by the potentiometric titration method specified in JIS K0070:1992 can be used. Details of the method are described below.

[Method for measuring hydroxyl value]

1. Reagents

(1) As the acetylation reagent, is used a solution prepared by mixing with sufficient stirring about 12.5 g (approximately 11.8 mL) of anhydrous acetic acid and pyridine added up to a total volume of 50 mL. Alternatively, is used a solution prepared by mixing with sufficient stirring about 25 g (approximately 23.5 mL) of anhydrous acetic acid and pyridine up to a total volume of 100 mL.
(2) As the titrant, is used a 0.5 mol/L potassium hydroxide (KOH) solution in ethanol.
(3) For others, toluene, pyridine, ethanol and distilled water should be ready for use.

2. Procedures

(1) Approximately 2 g of analyte is accurately weighed out in a flat-bottom flask, 5 mL of the acetylation reagent and 10 mL of pyridine are added, and an air condenser is placed on.
(2) The flask is heated in a bath at 100 °C for 70 minutes and then cooled. From the top of the condenser, 35 mL of toluene is added as a solvent and stirred. Subsequently, 1 mL of distilled water is added and the resultant is stirred to decompose any remaining anhydrous acetic acid. The flask is heated in the bath again for 10 minutes to complete the decomposition and then cooled.
(3) After rinsed with 5 mL of ethanol, the condenser is removed. Subsequently, 50 mL of pyridine is added as a solvent and the resultant is stirred.
(4) Using a volumetric pipette, is added 25 mL of the 0.5 mol/L KOH ethanol solution.
(5) Potentiometric titration is carried out with the 0.5 mol/L KOH ethanol solution. The inflection point in the resulting titration curve is taken as the final point.
(6) For a blank titration, procedures (1) to (5) are carried out without addition of the analyte.

3. Calculations

The hydroxyl value is calculated by the following equation:

$$\text{Hydroxyl value (mgKOH/g)} = [(B \cdot C) \times f \times 28.05]/S + D$$

wherein:

B is the volume (mL) of the 0.5 mol/L KOH ethanol solution used in the blank titration;
C is the volume (mL) of the 0.5 mol/L KOH ethanol solution used to titrate the analyte;
f is the factor of the 0.5 mol/L KOH ethanol solution;
S is the weight of analyte (g);
D is the acid value;
28.05 is one half the molecular weight of KOH.

As the tackifier resin $T_{HO1}$, among the various tackifier resins listed earlier, can be used solely one species having a hydroxyl value equal to or higher than a prescribed value, or a few or more such species in a suitable combination. In a preferable embodiment, as the tackifier resin $T_{HO1}$, at least a terpene phenol resin is used. A terpene phenol resin is preferable because the hydroxyl value can be changed at will by modifying the copolymerization ratio of phenol. The ratio of the terpene phenol resin in the tackifier resin $T_{HO1}$ is suitably about 50 % by weight or higher, preferably 80 % by weight or higher, or more preferably 90 % by weight or higher). The terpene phenol resin may account for essentially all (e.g. 95 % to 100 % by weight, or even 99 % to 100 % by weight) of the tackifier resin $T_{HO1}$.

When the art disclosed herein is implemented in an embodiment that uses a PSA layer comprising a tackifier resin $T_{HO1}$, the ratio of the tackifier resin $T_{HO1}$ in the total tackifier resin is not particularly limited. The ratio is, for instance, possibly 10 % by weight or higher, preferably 15 % by weight or higher, more preferably 20 % by weight or higher, or possibly even 25 % by weight or higher. In some embodiments, from the standpoint of the adhesive strength, miscibility, etc., the ratio can be, for instance, 70 % by weight or lower, 60 % by weight or lower, 50 % by weight or lower, or even 40 % by weight or lower.

The art disclosed herein can be preferably implemented in an embodiment where the PSA layer comprises a tackifier resin $T_H$ having a hydroxyl value of 40 mgKOH/g or greater and below 80 mgKOH/g. Hereinafter, a tackifier resin $T_H$ having a hydroxyl value of 40 mgKOH/g or greater and below 80 mgKOH/g may be referred to as a "tackifier resin $T_{HO2}$." The hydroxyl value of tackifier resin $T_{HO2}$ can be 45 mgKOH/g or greater, or even 50 mgKOH/g or greater. The hydroxyl value of tackifier resin $T_{HO2}$ can be 75 mgKOH/g or less, or even 70 mgKOH/g or less.

As the tackifier resin $T_{HO2}$, solely one species or a combination of species can be used from the species that satisfy prescribed hydroxyl values among the various tackifier resins described earlier. In a preferable embodiment, at least a terpene phenol resin is used as the tackifier resin $T_{HO2}$. The ratio of the terpene phenol resin in the tackifier resin $T_{HO2}$ is suitably about 50 % by weight or higher, preferably 80 % by weight or higher, or more preferably 90 % by weight or higher. The terpene phenol resin may account for essentially all (e.g. 95 % to 100 % by weight, or even 99 % to 100 % by weight) of the tackifier resin $T_{HO2}$.

When the art disclosed herein is implemented in an embodiment that uses a PSA layer comprising a tackifier resin $T_{HO2}$, the ratio of the tackifier resin $T_{HO2}$ in the total tackifier resin is not particularly limited. The ratio is, for instance, possibly 10 % by weight or higher, preferably 15 % by weight or higher, more preferably 20 % by weight or higher, or also possibly 25 % by weight or higher. In some embodiments, from the standpoint of the PSA's cohesion, etc., the ratio can be, for instance, 70 % by weight or lower, 60 % by weight or lower, 50 % by weight or lower, or even 40 % by weight or lower.

In some preferable embodiments, tackifier resins $T_{HO1}$ and $T_{HO2}$ can be used together. In such an embodiment, the relative amounts of $T_{HO1}$ and $T_{HO2}$ used can be selected so that, for instance, their weight ratio ($T_{HO1}:T_{HO2}$) is in a range of 1:5 to 5:1, or suitably in a range of 1:3 to 3:1 (e.g. 1:2 to 2:1). In a preferable embodiment, each of $T_{HO1}$ and $T_{HO2}$ is a terpene phenol resin.

In an embodiment of the art disclosed herein, the tackifier resin $T_H$ may comprise a tackifier resin $T_H$ having an aromatic ring and a hydroxyl value of less than 40 mgKOH/g. Hereinafter, a tackifier resin $T_H$ having a hydroxyl value below 40 mgKOH/g may be referred to as a "tackifier resin $T_{HR1}$." The hydroxyl value of tackifier resin $T_{HR1}$ is preferably below 30 mgKOH/g, more preferably below 10 mgKOH/g, possibly below 5 mgKOH/g, or even below 3 mgKOH/g. In some embodiments, it is preferable to use a tackifier resin $T_{HR1}$ having a hydroxyl value below 1 mgKOH/g or having no detectable hydroxy groups.

Examples of the tackifier resin having an aromatic ring include the aforementioned aromatic petroleum resins, aliphatic/aromatic copolymer-based petroleum resins, styrene-based resins, coumarone-indene resins, styrene-modified terpene resins, phenol-modified terpene resins, and rosin phenol resins. Among these, a species having a softening point of 120 °C or above (preferably 130 °C or above, e.g. 135 °C or above) while satisfying an aforementioned hydroxyl value can be used as the tackifier resin $T_{HR1}$. Examples of preferable tackifier resins $T_{HR1}$ include aromatic petroleum resins and styrene-based resins (e.g. $\alpha$-methylstyrene/styrene copolymer resin). The art disclosed herein can be implemented in an embodiment where the PSA layer is essentially free of a tackifier resin $T_{HR1}$.

In another preferable embodiment of the PSA disclosed herein, the tackifier resin $T_H$ may comprise a tackifier resin $T_H$ having an aromatic ring while being essentially free of isoprene units, terpene structures and rosin structures. Hereinafter, such a tackifier resin $T_H$ may be referred to as a "tackifier resin $T_{HR2}$." Here, the tackifier resin $T_{HR2}$ being essentially free of isoprene units, terpene structures and rosin structures refers to that the combined ratio of these structural moieties (i.e. isoprene units, terpene structures and rosin structures) in the tackifier resin $T_{HR2}$ is below 10 % by weight (more preferably below 8 % by weight, more preferably below 5 % by weight, e.g. below 3 % by weight). The ratio can be zero % by weight. The isoprene unit content, terpene structure content and rosin structure content in the tackifier resin $T_{HR2}$ can be measured, for instance, by NMR (nuclear magnetic resonance spectrometry).

Examples of a tackifier resin having an aromatic ring, but essentially free of isoprene units, terpene structures and rosin structures include the aromatic petroleum resins, aliphatic/aromatic copolymer-based petroleum resins, styrene-based resins, and coumarone-indene resins described above. Among these, one having a softening point of 120 °C or above (preferably 130 °C or above; e.g. 135 °C or above) can be used as the tackifier resin $T_{HR2}$. Particularly preferable tackifier resins $T_{HR2}$ include aromatic petroleum resins and styrene-based resins (e.g. α-methylstyrene/styrene copolymer resin). As the tackifier resin $T_{HR2}$, it is preferable to use a species having a hydroxyl value below 40 mgKOH/g (more preferably below 30 mgKOH/g, yet more preferably below 10 mgKOH/g, e.g. below 5 mgKOH/g or below 3 mgKOH/g). It is preferable to use, for instance, a tackifier resin $T_{HR2}$ having a hydroxyl value below 1 mgKOH/g or having no detectable hydroxy groups. Accordingly, as the tackifier resin $T_{HR2}$ in the art disclosed herein, those that qualify as the tackifier resin $T_{HR1}$ can be preferable used. Similarly, as the tackifier resin $T_{HR1}$ in the art disclosed herein, those that qualify as the tackifier resin $T_{HR2}$ can be preferably used. The art disclosed herein can be implemented in an embodiment where the PSA layer is essentially free of a tackifier resin $T_{HR2}$.

From the standpoint of enhancing the cohesion, the total amount of tackifier resin $T_H$ (i.e. the total amount of the tackifier resin with a softening point of 120 °C or higher) relative to 100 parts by weight of the base polymer is suitably at least 20 parts by weight, or preferably at least 30 parts by weight, or more preferably at least 35 parts by weight. The art disclosed herein can be preferably implemented in an embodiment where the total amount of tackifier resin $T_H$ to 100 parts by weight of the base polymer is 40 parts by weight or greater (e.g. 50 parts by weight or greater). The tackifier resin $T_H$ content to 100 parts by weight of base polymer can be, for instance, 100 parts by weight or less. From the standpoint of the adhesive strength and miscibility, it is suitably 90 parts by weight or less, or preferably 80 parts by weight or less.

From the standpoint of enhancing the cohesion, the ratio of the tackifier resin $T_H$ in the total tackifier resin content is suitably about 20 % by weight or higher, preferably 30 % by weight or higher, more preferably 40 % by weight or higher, possibly 50 % by weight or higher, or even 60 % by weight or higher. The ratio can be, for instance, 95 % by weight or lower. From the standpoint of increasing the adhesive strength, it is advantageously 85 % by weight or lower, possibly 75 % by weight or lower, 70 % by weight or lower, or even 65 % by weight or lower.


(Tackifier resin $T_L$)


In the art disclosed herein, the tackifier resin comprises, in addition to the tackifier resin $T_H$, a tackifier resin having a softening point below 120 °C (which may be referred to as a "tackifier resin $T_L$" hereinafter). The combined use of tackifier resins $T_H$ and $T_L$ can combine well-balanced adhesion and cohesion. This can favorably bring about a PSA sheet that shows a high peel strength.

The minimum softening point of the tackifier resin $T_L$ is not particularly limited. In typical, it is preferable to use a species having a softening point of 40 °C or higher (typically 60 °C or higher). From the standpoint of combining adhesion and cohesion at a high level, it is typically preferable to use a tackifier resin $T_L$ having a softening point of 80 °C or higher (more preferably 100 °C or higher) and below 120 °C. In particular, it is preferable to use a tackifier resin $T_L$ having a softening point of 110 °C or higher and below 120 °C.

As the tackifier resin $T_L$, solely one species or a suitable combination of species having softening points below 120 °C can be used among the various tackifier resins (petroleum resins, styrene-based resins, coumarone-indene resins, terpene resins, modified terpene resins, rosin-based resins, rosin derivative resins, ketone-based resins, etc.) described earlier.

The art disclosed herein can be preferably implemented in an embodiment where the PSA comprises, as the tackifier resin $T_L$, at least a petroleum resin or terpene resin. For instance, it is preferable to select a composition in which the primary component of the tackifier resin $T_L$ (i.e. a component accounting for more than 50 % by weight of the tackifier resin $T_L$) is a petroleum resin, a composition in which the primary component is a combination of a petroleum resin and a terpene resin, or like composition. In an embodiment preferable from the standpoint of the adhesive strength and miscibility, the primary component of the tackifier resin $T_L$ is a terpene resin (e.g. β-pinene polymer). The terpene resin may account for essentially all (e.g. 95 % by weight or more) of the tackifier resin $T_L$.

From the standpoint of enhancing the cohesion, the total tackifier resin $T_L$ content (i.e. the total amount of tackifier resins having softening points below 120 °C) relative to 100 parts by weight of the base polymer is suitably 50 parts by weight or less, preferably 40 parts by weight or less, or possibly 35 parts by weight or less. The tackifier resin $T_L$ content relative to 100 parts by weight of the base polymer can be, for instance, 5 parts by weight or greater. From the standpoint of enhancing the adhesion and the ease of impregnation into the fabric sheet, it is preferably 10 parts by weight or greater, possibly 15 parts by weight or greater, 20 parts by weight or greater, or even 25 parts by weight or greater.

In the art disclosed herein, no particular limitations are imposed on the total amount of tackifier resins relative to 100 parts by weight of the base polymer. From the standpoint of combining well-balanced adhesion and cohesion, the total amount of tackifier resins is typically suitably 20 parts by mass or greater, preferably 30 parts by mass or greater, or more preferably 40 parts by mass or greater (e.g. 50 parts by mass or greater). From the standpoint of low temperature properties (e.g. peel strength at low temperatures, etc.), it is typically suitably 200 parts by mass or less, preferably 150 parts by mass or less, or more preferably 120 parts by mass or less (e.g. 100 parts by mass or less). It is noted that the total amount of tackifier resins can be the combined amount of the total amount of the tackifier resin $T_H$ and the total amount of the tackifier resin $T_L$.

(Isocyanate compound)

The PSAcomposition disclosed herein may further comprise an isocyanate compound. The isocyanate compound may be useful in enhancing the cohesion of PSA and obtaining a PSA sheet that shows a higher peel strength. As the isocyanate compound, it is preferable to use a polyfunctional isocyanate (which refers to a compound having an average of two or more isocyanate groups per molecule, including a compound having an isocyanurate structure). As the polyfunctional isocyanate, can be used one, two or more species selected from various isocyanate compounds (polyisocyanates) containing two or more isocyanate groups per molecule. Examples of such a polyfunctional isocyanate include aliphatic polyisocyanates, alicyclic polyisocyanates, and aromatic polyisocyanates.

Examples of an aliphatic polyisocyanate include 1,2-ethylene diisocyanate; tetramethylene diisocyanates such as 1,2-tetramethylene diisocyanate, 1,3-tetramethylene diisocyanate, and 1,4-tetramethylene diisocyanate; hexamethylene diisocyanates such as 1,2-hexamethylene diisocyanate, 1,3-hexamethylene diisocyanate, 1,4-hexamethylene diisocyanate, 1,5-hexamethylene diisocyanate, 1,6-hexamethylene diisocyanate, and 2,5-hexamethylene diisocyanate; 2-methyl-1,5-pentane diisocyanate, 3-methyl-1,5-pentane diisocyanate, and lysine diisocyanate.

Examples of an alicyclic polyisocyanate include isophorone diisocyanate; cyclohexyl diisocyanates such as 1,2-cyclohexyl diisocyanate, 1,3-cyclohexyl diisocyanate, and 1,4-cyclohexyl diisocyanate; cyclopentyl diisocyanates such as 1,2-cyclopentyl diisocyanate and 1,3-cyclopentyl diisocyanate; hydrogenated xylylene diisocyanate, hydrogenated tolylene diisocyanate, hydrogenated diphenylmethane diisocyanate, hydrogenated tetramethylxylene diisocyanate, and 4,4'-dicyclohexylmethane diisocyanate.

Examples of an aromatic polyisocyanate include 2,4-tolylene diisocyanate, 2,6-tolylene diisocyanate, 4,4'-diphenylmethane diisocyanate, 2,4'-diphenylmethane diisocyanate, 2,2'-diphenylmethane diisocyanate, 4,4'-diphenylether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, 3,3'-dimethoxydiphenyl-4,4'-diisocyanate, xylylene-1,4-diisocyanate, and xylylene-1,3-diisocyanate.

A preferable example of an isocyanate compound is a polyfunctional isocyanate having an average of three or more isocyanate groups per molecule. Such a tri-functional or higher polyfunctional isocyanate can be a multimer (typically a dimer or a trimer), a derivative (e.g., an addition product of a polyol and two or more polyfunctional isocyanate molecules), a polymer or the like of a di-functional, tri-functional, or higher polyfunctional isocyanate. Examples include polyfunctional isocyanates such as a dimer and a trimer of a diphenylmethane diisocyanate, an isocyanurate (a cyclic trimer) of a hexamethylene diisocyanate, a reaction product of trimethylol propane and a tolylene diisocyanate, a reaction product of trimethylol propane and a hexamethylene diisocyanate, polymethylene polyphenyl isocyanate, polyether polyisocyanate, and polyester polyisocyanate. Commercial polyfunctional isocyanates include trade name DURANATE TPA-100 available from Asahi Kasei Chemicals Corporation; trade names CORONATE L, CORONATE HL, CORONATE HK, CORONATE HX, CORONATE 2096 available from Tosoh Corporation.

When an isocyanate compound is used, its amount used is not particularly limited. For instance, relative to 100 parts by weight of the base polymer, it can be more than zero part by weight and 10 parts by weight or less (typically 0.01 part to 10 parts by weight). In typical, the amount of the isocyanate compound used to 100 parts by weight of the base polymer is preferably 0.1 part to 10 parts by weight (typically 0.3 part to 3 parts by weight, e.g. 0.5 part to 1 part by weight). The use of an isocyanate compound in such a range can bring about a PSA sheet having particularly well-balanced properties.

(Other components)

The PSA layer in the art disclosed herein may comprise one, two or more species of rubbery polymer as necessary besides the base polymer as far as the effects of this invention are not impaired. The rubbery polymer can be various polymers known in the PSA field, such as rubber-based polymers, acrylic polymers, polyester-based polymers, urethane-based polymers, polyether-based polymers, silicone-based polymers, polyamide-based polymers, and fluoropolymers. The art disclosed herein can be practiced preferably in an embodiment wherein the PSA layer is essentially free of such other rubbery polymer besides the base polymer (e.g., an embodiment where the other rubbery polymer content is zero to 1 part by weight relative to 100 parts by weight of the base polymer).

The PSA layer in the art disclosed herein may contain as necessary various additives generally used in the PSA field, such as leveling agent, crosslinking agent, crosslinking co-agent, plasticizer, softening agent, filler, colorant (pigment, dye, etc.), antistatic agent, anti-aging agent, ultraviolet light absorber, anti-oxidant, photostabilizer, and so on. With respect to these various additives, those heretofore known can be used by typical methods. The PSA disclosed herein can be made preferably in an embodiment essentially free of a liquid rubber such as liquid polybutene, etc., (e.g., where the liquid rubber content relative to 100 parts by weight of the base polymer is 1 part by weight or less, or may be even zero part by weight).

In a preferable embodiment, the PSA layer may have a composition where the combined amount of the base polymer and the tackifier resin accounts for 90 % by weight or more of the total weight of the PSA (i.e., the weight of a PSA layer constituted with this PSA). For example, in a preferable embodiment, the combined amount of the base polymer and the tackifier resin is at least 90 % to 99.8 % by weight (typically, e.g. 95 % to 99.5 % by weight) of the total weight of the PSA.

In another preferable embodiment, the PSA may have a composition essentially free of a chelate compound. Herein, the chelate compound refers to, for instance, a chelate complex of an alkaline earth metal oxide and a resin (an alkyl phenol resin, etc.) having a functional group (hydroxyl group, methylol group, etc.) capable of coordinating the oxide. The art disclosed herein can be practiced preferably in an embodiment where the PSA composition is essentially free of such a chelate compound or in an embodiment containing none or at most 1 % by weight of a chelate compound. According to such an embodiment, it may be possible to obtain a PSA sheet exhibiting even greater adhesive strength.

(PSA composition)

The PSA layer in the art disclosed herein may be formed from a PSA composition comprising a base polymer and a tackifier resin. The form of the PSA composition disclosed herein is not particularly limited, and can be, for instance, a solvent-based PSA composition containing a PSA (an adhesive component) having a composition described above in an organic solvent, a water-dispersed (typically, an aqueous emulsion-based) PSA composition containing a PSA dispersed in an aqueous solvent, a PSA composition of the hot-melt type or the like. From the standpoint of the adhesion and the ease of impregnating the fabric sheet, in some embodiments, a PSA layer formed from a solvent-based PSA composition is preferable.

The solvent-based PSA composition can be typically prepared as a solution containing the respective components described above in an organic solvent. The organic solvent can be selected among known or conventional organic solvents. For instance, can be used any one species or a mixture of two or more species among aromatic compounds (typically aromatic hydrocarbons) such as toluene and xylene; acetic acid esters such as ethyl acetate and butyl acetate; aliphatic or alicyclic hydrocarbons such as hexane, cyclohexane, and methyl cyclohexane; halogenated alkanes such as 1,2-dichloroethane; and ketones such as methyl ethyl ketone and acetyl acetone. While no particular limitations are imposed, the solvent-based PSA composition is suitably prepared to have a non-volatile content (NV) of at least 30 % to 65 % by weight (e.g. 40 % to 55 % by weight). Too low an NV tends to result in higher production costs while too high an NV may lower the workability such as the ease of application, etc.

As the method for obtaining a PSA sheet from a PSA composition, various conventionally known methods can be applied. For example, it is preferable to employ a method (direct method) where the PSA composition is directly provided (typically applied) to a fabric sheet and allowed to dry to form a PSA layer. Alternatively, can be employed a method (transfer method) where the PSA composition is provided to a releasable surface (e.g. a surface of a release liner) and allowed to dry to form a PSA layer on the surface, and the PSA layer is transferred to a fabric sheet.

The PSA composition can be applied, for instance, with a known or commonly used coater such as gravure roll coater, reverse roll coater, kiss roll coater, dip roll coater, bar coater, knife coater, spray coater, or the like. From the standpoint of facilitating the crosslinking reaction and increasing the production efficiency, the PSA composition is dried preferably with heating. In typical, it is preferable to use a temperature of, for instance, about 40 °C to 150 °C (typically, 40 °C to 120 °C, e.g. 50 °C to 120 °C, or even 70 °C to 100 °C). The drying time is not particularly limited while it can be about a few tens of seconds to a few minutes (e.g. within about 5 minutes, preferably about 30 seconds to 2 minutes). Afterwards, an additional drying step may be included as necessary. While the PSA layer is typically formed continuously, it may be formed in a regular pattern of dots or stripes, etc., or in a random pattern. In some embodiments, the PSA layer in the art disclosed herein is preferably formed as a layer essentially free of air bubbles. Here, the PSA layer essentially free of air bubbles means that at 25 °C, the volume ratio of air bubbles in the apparent volume of the PSA layer is below 3 % by volume (typically below 1 % by volume).

(Thickness of PSA layer)

In the PSA sheet disclosed herein, the PSA layer has a thickness greater than 100 $\mu$m and less than 190 $\mu$m. When the PSA layer has a thickness greater than 100 $\mu$m and is laminated on a fabric sheet, high peel strength can be obtained relative to both smooth and rough surfaces. The PSA layer having a thickness less than 190 $\mu$m can favorably bring about a PSA sheet whose peel strength to rough surface (to-rough-surface peel strength) is comparable to or greater than its peel strength to smooth surface (to-smooth-surface peel strength). In some embodiments, the peel strength ratio (rough surface/smooth surface) is, for instance, 1.0 or higher, preferably higher than 1.0, or more preferably 1.05 or higher. The to-rough-surface peel strength is determined by the method described later in Examples, using felt (product name HIMELON SP30B available from Ambic Co., Ltd.) as the adherend. The to-smooth-surface peel strength is determined by the method described later in Examples, using an ABS plate as the adherend.

When the PSA sheet has a PSA layer on each face of a fabric sheet, the PSA layer's thickness refers to the thickness of the PSA layer per face. The thickness of the PSA layer (first PSA layer) laminated on the first face of the fabric sheet can be comparable to or different from the thickness of the PSA layer (second PSA layer) laminated on the second face of the fabric sheet. Likewise, the first PSA layer's composition (e.g. the type of tackifier resin and the amount used, the type of crosslinking agent and the amount used if using any, etc.) can be identical to or different from the composition of the second PSA layer. The PSA sheet disclosed herein can be preferably made in an embodiment where the first and second PSA layers have the same composition (e.g. formed from the same PSA composition) and also have the same thickness. The PSA sheet in such an embodiment is conveniently used as there is no right or wrong side.

<PSA sheet>

The total thickness of the PSA sheet disclosed herein is typically greater than 100 $\mu$m. It can be, for instance, greater than 100 $\mu$m and less than 2000 $\mu$m. In some embodiments, from the standpoint of the anti-adhesive transfer properties, etc., the PSA sheet may have, for instance, a total thickness less than 1000 $\mu$m, less than 500 $\mu$m, less than 400 $\mu$m, or even less than 350 $\mu$m. The PSA sheet's total thickness can be, for instance, greater than 150 $\mu$m. From the standpoint of increasing the peel strength, it is preferably greater than 180 $\mu$m, possibly greater than 200 $\mu$m, greater than 240 $\mu$m, or even greater than 280 $\mu$m.

The total thickness of the PSA sheet disclosed herein is typically at least 1.1 times greater than the thickness of the fabric sheet in the PSA sheet. For instance, it can be at least 1.5 times greater. From the standpoint of increasing the peel strength, the total thickness of the PSA sheet is advantageously at least 3.0 times greater than the thickness of the fabric sheet, preferably at least 4.0 times greater, or more preferably at least 4.5 times greater (e.g. about 4.5 times to 6.5 times greater). In some embodiments, the total thickness of the PSA sheet can be at least 7.0 times greater than the thickness of the fabric sheet, or at least 10 times greater, at least 12 times greater (e.g. about 12 times to 25 times greater), or even at least 15 times greater. The total thickness of the PSA sheet can be, for instance, up to 50 times greater than the thickness of the fabric sheet. In some embodiments, from the standpoint of the anti-adhesive-transfer properties, etc., the total thickness of the PSA sheet can be up to 30 times greater than the thickness of the fabric sheet, up to 25 times greater, up to 20 times greater, up to 16 times greater, up to 11 times greater, or also up to 8.0 times greater.

The 180° peel strength to stainless steel plate of the PSA sheet disclosed herein is not particularly limited. It is suitably 20 N/20mm or greater, preferably 30 N/20mm or greater, more preferably 35 N/20mm or greater, or yet more preferably 40 N/20mm or greater. The PSA sheet disclosed herein can also be preferably made in an embodiment where the 180° peel strength is 44 N/20mm or greater, 47 N/20mm or greater, or 50 N/20mm or greater. The 180° peel strength is typically 100 N/20mm or less. From the standpoint of reducing leftover PSA (adhesive transfer) onto the adherend surface after removal, it is preferably 80 N/20mm or less, possibly 70 N/20mm or less, or even 65 N/20mm or less.

Here, the 180° peel strength of a PSA sheet can be obtained by press-bonding the PSA sheet to a stainless steel plate (more specifically, a SUS304BA plate) as the adherend and measuring the 180° peel adhesion (peel strength) at a peel angle of 180° and a tensile speed of 300 mm/min based on JIS Z 0237. For the measurement, it is preferable to adhere a suitable backing material (e.g. 25 $\mu$m thick PET film) to the backside (the surface on the reverse side of the face adhered to an adherend) of the PSA sheet for reinforcement. The PSA sheet disclosed herein can be such that in the 180° peel strength measurement, peeling proceeds at the interface between the adherend and the PSA sheet without leaving residual PSA on the SUS304BA plate as the adherend. Such a PSA sheet can favorably combine high peel strength suited for fixing and bonding constituents (parts) of various products with good anti-adhesive-transfer properties for separating the constituents and the PSA sheet when the constituents are recycled.

The PSA sheet disclosed herein can be preferably used for bonding or fixing components of various products such as OA equipment, home electric appliances and automobiles, typically as a double-faced PSA sheet comprising a fabric sheet and PSA layers (first and second PSA layers) laminated on first and second faces of the fabric sheet. The PSA sheet disclosed herein can tightly bond with both smooth and rough surfaces; and therefore, it is particularly favorable for bonding a smooth surface of one member and a rough surface of another member together.

As used herein, the smooth surface typically refers to a surface having a surface roughness Sz less than 100 $\mu$m. The PSA sheet disclosed herein can be preferably used in an embodiment where one adhesive face is press-bonded to a surface (a smooth surface) having a surface roughness Sz less than 100 $\mu$m, less than 85 $\mu$m, or less than 70 $\mu$m. In such an embodiment, the minimum surface roughness Sz of the smooth surface is not particularly limited. For instance, it can be 1 $\mu$m or greater, 5 $\mu$m or greater, 10 $\mu$m or greater, 25 $\mu$m or greater, or even 40 $\mu$m or greater. From the standpoint of increasing the peel strength, it can be advantageous that the smooth surface has not too small a surface roughness Sz while below 100 $\mu$m.

As used herein, the rough surface typically refers to a surface having a surface roughness Sz of 200 $\mu$m or greater and 1000 $\mu$m or less. The PSA sheet disclosed herein can be preferably made in an embodiment where the other adhesive face is press-bonded to a surface (a rough surface) having a surface roughness Sz of 200 $\mu$m or greater and 1000 $\mu$m or less. The rough surface has a surface roughness Sz of more preferably 250 $\mu$m or greater, possibly 450 $\mu$m or greater, or even 650 $\mu$m or greater. The rough surface may have a surface roughness Sz of, for instance, 850 $\mu$m or less, 700 $\mu$m or

less, 500 μm or less, or even 350 μm or less.

Here, as used herein, the surface roughness Sz refers to the three-dimensional surface roughness defined by ISO 25178, which is the maximum height within the target area for analysis, in other words, the distance in the height direction from the highest point to the lowest point. The surface roughness Sz can be determined, using a 3D measuring laser microscope (e.g. product name LEXT OLS4000 available from Olympus Corporation). Specific measurement procedures and conditions can be suitably set in accordance with the measurement target and measurement system. The surface roughness Sz described later in Examples was determined with a ×20 objective lens over a 660 μm by 660 μm measurement area using product name LEXT OLS4000 available from Olympus Corporation.

The material forming the smooth surface is not particularly limited. It can be, for instance, a resin material such as acrylonitrile butadiene styrene copolymer resin, polyolefinic resin (polyethylene resin, polypropylene resin, ethylene-vinyl acetate copolymer, etc.), polystyrene resin, polycarbonate resin, acrylic resin and PET resin; an inorganic material such as glass and ceramics; a metal material such as stainless steel (SUS), aluminum and galvanized sheet iron; a rubber material such as natural rubber and synthetic rubber; an elastomer material such as olefinic thermoplastic elastomer and styrene-based thermoplastic elastomer; a composite material of these; or the like. The smooth surface may be a surface of a member in which at least the surface is formed from such a material. Favorable examples of the smooth surface include a molded body and film comprising an aforementioned resin material. The smooth surface is typically a non-porous surface. The smooth surface can be a non-porous surface of a member having a void, such as the surface of a corrugated plastic board and the resin film surface in a laminate of a foam and resin film.

The rough surface is preferably a surface of a porous body. The material forming the porous body is not particularly limited. It can be a fibrous substance, for instance, aforementioned natural fiber and chemical fiber (synthetic fiber); an inorganic fiber such as glass fiber and carbon fiber; and a metal fiber. The rough surface can be of a woven or nonwoven fabric (conceptually encompassing the sort of paper and felt), knit, net or the like of single or blended spinning of various fibrous substances, etc. The porous body can be a foam. Non-limiting examples of the foam here include polyolefinic resin foams such as polyethylene foam and polypropylene foam; polyester-based resin foams such as polyethylene terephthalate foam, polyethylene naphthalate foam and polybutylene terephthalate foam; polyvinyl chloride-based resin foams such as polyvinyl chloride foam; vinyl acetate-based resin foams; polyphenylene sulfide resin foam; amide-based resin foams such as aliphatic polyamide (nylon) resin foam and all aromatic polyamide (aramid) resin foam; polyimide-based resin foams; polyetheretherketone (PEEK) foam; styrene-based resin foams such as polystyrene foam; urethane-based resin foams such as polyurethane resin foam; and rubber-based resin foams such as polychloroprene rubber foam. Such a foam may have an open cell structure or a closed cell structure. Alternatively, the rough surface can also be a surface of a non-porous body (e.g. a non-porous body formed of a resin material, inorganic material, metal material, elastomer material, a composite material of these, etc.) or a surface of a porous body laminated with a non-porous body. The rough surface can be a surface of a sheet member.

For instance, the PSA sheet disclosed herein can be preferably used for fixing a porous sheet to the circumference of a brush roll core of a vacuum cleaner. The core is generally formed as a bar or cylinder at large. The brush roll is sometimes called a rolling brush or head brush and typically configured to roll around the core shaft when placed in the suction nozzle opening of a vacuum cleaner. During this, the porous sheet (or "brush cloth" hereinafter) fixed to the circumference of the core rolls while making contact with the area being cleaned, serving to bring objects to be removed from the area being cleaned into the vacuum cleaner. As the brush cloth, it is preferable to use an aforementioned fabric sheet (e.g. felt formed of a synthetic fiber such as polyamide), a foam sheet, pile fabric or hook-and-loop fastener. The thickness of the brush cloth is not particularly limited and can be, for instance, about 0.01 mm to 100 mm (preferably about 0.05 mm to 10 mm). The backside (the face bonded with the core's circumference) of such a brush cloth can be the rough surface (e.g. a surface having a surface roughness Sz of 450 μm or greater and 1000 μm or less). The core's circumference can be the smooth surface.

Recently, there is a tendency of increasing the brush roll's rotational frequency with increasing performance of vacuum cleaners; and therefore, higher bonding strength is required of a PSA sheet fixing the brush cloth to the core's circumference. On the other hand, from the standpoint of effective utilization of resources, etc., it is desirable to configure the brush roll so that when applied in a wrong place during the application, it can be re-peeled (removed) from the case and re-applied to the right place. The PSA sheet disclosed herein tightly bonds to both smooth and rough surfaces while having great removability from the smooth surface; and therefore, it is suitable for fixing a brush cloth to the circumference of a brush roll core. As the PSA sheet, it is preferable to use a double-faced PSA sheet having first and second PSA layers laminated on first and second faces of a fabric sheet. Between the first and second PSA layer, one (e.g. the second PSA layer) is bonded with the backside of a brush cloth and the other one (e.g. the first PSA layer) is bonded with the core's circumference to fix the brush cloth to the core's circumference.

Examples of other preferable applications of the PSA sheet disclosed herein include fixing the backside of a hook-and-loop fastener to an attachment target. The PSA sheet can also be preferably used for fixing either the hook member or loop member of the hook-and-loop fastener. For instance, it is favorable for fixing a hook-and-loop fastener having a backside formed of a nonwoven fabric. The nonwoven fabric can be, for instance, a spunbond nonwoven web (i.e.

a nonwoven fabric obtained by spunbonding; the same applies, hereinafter), meltblown nonwoven web, spunlace nonwoven web, spunbond meltblown spunbond nonwoven web, unbonded nonwoven web, electrospun nonwoven web, flashspun nonwoven web (e.g. DuPont's TYVEKTM), carded nonwoven fabric, fluffed nonwoven fabric (e.g. a nonwoven fabric obtained by thermal bonding, glue bonding, spun lacing, or an air-through method), etc. It can also be a laminate of nonwoven fabrics of different fibers (e.g. a laminate of spunbond nonwoven web / meltblown nonwoven web / spunbond nonwoven web, etc.). The fiber forming the nonwoven fabric is not particularly limited. It can be one, two or more species selected among, for instance, polyolefin fibers such as polypropylene fiber, polyethylene fiber and $\alpha$-olefin copolymer; polyester fibers such as PET fiber, polylactic acid fiber and polyglycolic acid fiber as well as polyamide fiber, polyurethane fiber, elastomer fiber, rayon fiber, cellulose fiber, and acrylic fiber. Favorable examples of the fiber forming the nonwoven fabric include polyolefin fibers (e.g. polypropylene fiber) and polyester fibers (e.g. PET fiber). The hook-and-loop fastener's backside can be the rough surface (e.g. a surface having a surface roughness Sz of 450 $\mu$m or greater and 850 $\mu$m or less). The PSA sheet disclosed herein can tightly bond with both smooth and rough surfaces; and therefore, it can be preferably used for fixing a hook-and-loop fastener's backside to a smooth or rough surface (preferably a smooth surface) of an attachment target. As the PSA sheet, it is preferable to use a double-faced PSA sheet having first and second PSA layers laminated on first and second faces of a fabric sheet, respectively. Between the first and second PSA layer, one (e.g. the second PSA layer) is bonded with the hook-and-loop fastener's backside and the other one (e.g. the first PSA layer) is bonded with the attachment target to fix the hook-and-loop fastener to the attachment target.

This Description provides an adhesive member comprising a double-faced PSA sheet that has a first PSA layer laminated on a first face of a fabric sheet and a second PSA layer laminated on a second face of the fabric sheet, and further comprising a sheet member that has a rough surface (e.g. a rough surface having a surface roughness Sz of 200 $\mu$m to 1000 $\mu$m), with the second PSA layer of the PSA sheet bonded with the rough surface. Each of the first and second PSA layers can be a PSA layer disclosed herein. Fig. 2 schematically illustrates a cross-sectional structure of the adhesive member according to an embodiment. In adhesive member 100, surface 12A of the second PSA layer 12 of double-faced PSA sheet 1 having the same structure as shown in Fig. 1 is bonded with a surface 50A (a rough surface having a surface roughness Sz of 200 $\mu$m to 1000 $\mu$m) of a sheet member 50. The thickness of either the first PSA layer 11 or second PSA layer 12 is greater than 100 $\mu$m and less than 190 $\mu$m, for instance, 140 $\mu$m or greater and 180 $\mu$m or less for each. Sheet member 50 is, for instance, a hook-and-loop fastener's loop member and surface 50A is the backside thereof. Adhesive member 100 can be used as an adhesive hook-and-loop fastener's loop member, by adhering the surface 11A of the first PSA layer 11 to an arbitrary attachment target. By this, the loop member (sheet member 50) of the hook-and-loop fastener can be fixed to the attachment target. Modification examples of adhesive member 100 in such an embodiment include an embodiment where sheet member 50 shown in Fig. 2 is, for instance, a hook-and-loop fastener's loop member; and an embodiment where it is a brush cloth for a vacuum cleaner brush roll. Sheet member 50 can be, for instance, a woven fabric, nonwoven fabric (conceptually encompassing the sort of paper and felt), knit, net, or foam sheet.

The adhesive member disclosed herein has a 180° peel strength (or an "adhesive member's to-ABS peel strength" hereinafter) of 25 N/20mm or greater, determined by applying the first PSA layer of the PSA sheet that constitutes the adhesive member to an ABS resin plate (typically a smooth surface having a surface roughness Sz less than 100 $\mu$m). According to such an adhesive member, a sheet member can be tightly yet removably fixed to an adherend. In some embodiments, the adhesive member's to-ABS peel strength can be, for instance, 10 N/20mm or greater. From the standpoint of the reliability of bonding to adherends, it can be 15 N/20mm or greater, 20 N/20mm or greater, or even 25 N/20mm or greater. The adhesive member's maximum to-ABS peel strength is not particularly limited. In some embodiments, the to-ABS peel strength is, for instance, 100 N/20mm or less. From the standpoint of reducing leftover PSA (adhesive transfer) onto the adherend surface after removal, it is preferably 80 N/20mm or less, possibly 70 N/20mm or less, or even 65 N/20mm or less. The PSA sheet disclosed herein is desirably such that in the 180° peel strength measurement, peeling proceeds at the interface between the adherend and the PSA sheet without leaving residual PSA on the ABS plate as the adherend. Such a PSA sheet can favorably combine high peel strength suited for fixing and bonding constituents (parts) of various products with good anti-adhesive-transfer properties for separating the constituents and the PSA sheet when the constituents are recycled.

[Examples]

Several working examples related to the present invention are described below, but the present invention is not intended to be limited to these examples. In the description below, "parts" and "%" are based on the weight unless otherwise specified. The physical properties in the description below were measured or evaluated as follows.

<Preparation of PSA compositions>

(PSA composition A)

With stirring, were mixed 100 parts of a styrene-isoprene block copolymer (available from Zeon Corporation, product name QUINTAC 3520, 15 % styrene content, 78 % diblock fraction) as a base polymer, 20 parts of an aromatic petroleum resin (available from JX Nippon Oil & Energy Corporation, trade name NISSEKI NEOPOLYMER 150, softening point 155 °C, hydroxyl value below 1 mgKOH/g), 40 parts of a terpene phenol resin, 30 parts of a terpene resin, 0.75 part by solid content of an isocyanate compound (available from Tosoh Corporation, trade name CORONATE L), 3 parts of an anti-aging agent, and toluene as a solvent to prepare a PSA composition (PSA composition A) at 50 % NV.

Here, as the terpene phenol resin, two species, namely, trade name YS POLYSTAR S145 (softening point 145 °C, hydroxyl value 100 mgKOH/g) and trade name YS POLYSTAR T145 (softening point 145 °C, hydroxyl value 60 mgKOH/g) both available from Yasuhara Chemical Co., Ltd., were used at a mass ratio of 1:1 in a combined amount of 40 parts. As for the terpene resin, was used product name YS RESIN PX1150N (softening point 115 °C, hydroxyl value below 1 mgKOH/g) available from Yasuhara Chemical Co., Ltd. As the anti-aging agent, was used product name IRGANOX CB612 available from BASF Corporation (a blend of product names IRGAFOS 168 and IRGANOX 565 both available from BASF Corporation at a mass ratio of 2:1).

(PSA composition B)

Into a reaction vessel equipped with a stirrer, thermometer, nitrogen inlet and a reflux condenser, were placed 100 parts of n-butyl acrylate (BA), 5 parts of vinyl acetate (VAc), 3 parts of acrylic acid (AA) and 0.1 part of 2-hydroxyethyl acrylate (HEA) as monomers, 0.35 part of 2,2'-azobisisobutylonitrile (AIBN) and toluene as the polymerization solvent. Under nitrogen flow, solution polymerization was carried out to obtain an acrylic polymer solution. To this solution, per 100 parts of acrylic polymer in the solution, was added 2 parts (by non-volatiles) of an isocyanate-based crosslinking agent (product name CORONATE L available from Tosoh Corporation) to prepare a PSA composition (PSA composition B).

<Fabrication of PSA sheets>

(Example 1)

Onto one face of high-grade paper, was laminated a 25 $\mu$m thick polyethylene layer; over this, was provided release treatment with a silicone-based release agent to obtain a release liner sheet. To the release-treated face of the release liner, was applied the PSA composition obtained above and allowed to dry to form a 150 $\mu$m thick PSA layer on the release liner. The PSA layer was adhered to a first face of a fabric sheet S to form a first PSA layer. As the fabric sheet S, was used a pulp-based nonwoven fabric of 49 $\mu$m in thickness, 0.469 g/cm$^3$ in bulk density and 23 g/m$^2$ in grammage. Likewise, was formed a 150 $\mu$m thick PSA layer on the release liner and the resultant was adhered to a second face of the fabric sheet S to form a second PSA layer. In this manner, was obtained a laminate having the first and second PSA layers laminated on the first and second faces of the fabric sheet, respectively, with the surface of each PSA layer protected with the release liner. Subsequently, at a pressure of 0.3 MPa and a speed of 0.5 m/min, the laminate was fed through a laminator at 100 °C once and then allowed to cure for one hour in an environment at 23 °C to obtain a double-faced PSA sheet according to this Example.

(Comparative Examples 1 to 3)

The thicknesses of the first and second PSA layers were changed as shown in Table 1. Otherwise in the same manner as Example 1, were fabricated double-faced PSA sheets according to Comparative Examples 1 to 3.

(Comparative Example 4)

In place of PSA composition A, was used PSA composition B. Otherwise in the same manner as Example 1, was fabricated a double-faced PSA sheet according to Comparative Example 4.

<Determination of 180° peel strength >

(Peel strength to rough surface)

From the PSA sheet according to each Example, was removed the release liner covering the first adhesive face; and thereto was adhered 25 $\mu$m thick polyethylene terephthalate (PET) film for backing. The backed PSA sheet was cut to a 20 mm wide and 100 mm long size to prepare a test piece. In an environment at 23 °C and 50 %RH, was removed the release liner covering the second adhesive face of the test piece; and using a roller laminator, at 100 °C, 0.3 MPa and 0.3 m/min, the test piece was press-bonded to the surface (maximum height Sz = 761 μm) of felt as the adherend. As the adherend, was used product name HIMELON SP30B (pressed felt formed primarily of wool) available from Ambic Co., Ltd. This was left standing for 30 minutes in the same environment. Subsequently, based on JIS Z 0237, using a tensile tester, was determined the 180° peel adhesion (N/20mm) at a tensile speed of 300 mm/min. Three measurements (i.e. N = 3) were taken and their arithmetic mean value was determined. The results are shown in Table 1.

(Peel strength to smooth surface)

The PSA sheet according to each Example was cut to a 20 mm wide and 100 mm long size to prepare a test piece. From this test piece, was removed the release liner covering the second adhesive face. Using a roller laminator, at 100 °C, 0.3 MPa and 0.3 m/min, the test piece was press-bonded to the surface of product name HIMELON SP30B available from Ambic Co., Ltd. Subsequently, the release liner covering the first adhesive face of the test piece was removed and the test piece was press-bonded to the adherend surface (maximum height Sz = 58 μm) with a 2 kg roller moved back and forth once. As the adherend, was used an acrylonitrile butadiene styrene copolymer resin plate (ABS plate) available from Shin-kobe Electric Machinery Co., Ltd. This was left standing for 30 minutes in the same environment. Subsequently, based on JIS Z 0237, using a tensile tester, was determined the 180° peel adhesion (N/20mm) at a tensile speed of 300 mm/min. Three measurements (i.e. N = 3) were taken and their arithmetic mean value was determined. The results are shown in Table 1.

It is noted that in determining the peel strength to smooth surface, the resultant obtained by press-bonding the test piece's second adhesive face to the felt can be thought as an adhesive member in which the test piece's second PSA layer is bonded with the felt as a sheet member.

[Table 1]

Table 1

| | | Comp. Ex. 1 | Comp. Ex. 2 | Ex 1 | Comp. Ex. 3 | Comp. Ex 4 |
|---|---|---|---|---|---|---|
| PSA layer | PSA<br>Thickness (μm) | A<br>64 | A<br>100 | A<br>150 | A<br>200 | B<br>150 |
| Peel strength (N/20mm) | To-rough-surface (felt) | 14 | 22 | 29 | 29 | 15 |
| | To-smooth-surface (ABS plate) | 20 | 24 | 27 | 33 | 22 |
| Peel strength ratio (rough surface/smooth surface) | | 0.7 | 0.9 | 1.1 | 0.9 | 0.7 |

As shown in Table 1, the PSA sheet of Example 1 with PSA layers having thicknesses greater than 100 μm and less than 190 μm showed high peel strength to both the rough and smooth surfaces. The PSA sheet of Example 1 had a peel strength ratio (rough surface/smooth surface) above 1. It is noted that when the PSA sheet of Example 1 was measured for the peel strength to smooth surface, there was no observed adhesive transfer to the ABS plate.

<Preparation of adhesive members>

(Example 2)

The PSA sheet of Example 1 was cut to a 20 mm wide and 100 mm long size to prepare a test piece. From this test piece, was removed the release liner covering the first adhesive face. Using a roller laminator, at 100 °C, 0.3 MPa and 0.3 m/min, the test piece was press-bonded to the backside (maximum height Sz = 761 μm) of a loop member of a hook-and-loop fastener (product name Free Magic Binding Tape (Single face) MKT-25B available from Trusco Nakayama Corporation) to obtain an adhesive member according to this Example.

(Example 3)

As the sheet member, was used a nonwoven fabric (a pulp-based nonwoven fabric available from Daifuku Paper Manufacturing Co., Ltd., product name SP-14K, maximum height). Otherwise in the same manner as Example 2, was obtained an adhesive member according to this Example.

<Determination of 180° peel strength>

(Peel strength to rough surface)

The PSA sheet 1 of Example 1 was measured for the 180° peel strength to the sheet member used in each of Examples 2 and 3. In particular, from the PSA sheet of Example 1, was removed the release liner covering the first adhesive face and 25 $\mu$m thick PET film was adhered for backing. The backed PSA sheet was cut to a 20 mm wide and 100 mm long size to prepare a test piece. In an environment at 23 °C and 50 %RH, was removed the release liner covering the second adhesive face of the test piece. Using a roller laminator, at 100 °C, 0.3 MPa and 0.3 m/min, the test piece was press-bonded to the surface of the sheet member (adherend) used in Example 2 or 3. This was left standing for 30 minutes in the same environment. Subsequently, based on JIS Z 0237, using a tensile tester, was determined the 180° peel adhesion (N/20mm) at a tensile speed of 300 mm/min. Three measurements (i.e. N = 3) were taken and their arithmetic mean value was determined.

(Peel strength to smooth surface)

The PSA sheet of Example 1 was cut to a 20 mm wide and 100 mm long size to prepare a test piece. From this test piece, was removed the release liner covering the second adhesive face. Using a roller laminator, at 100 °C, 0.3 MPa and 0.3 m/min, the test piece was press-bonded to the surface of the sheet member (adherend) used in Example 2 or 3. Subsequently, the release liner covering the first adhesive face of the test piece was removed and the test piece was press-bonded to the surface of the ABS plate as the adherend with a 2 kg roller moved back and forth once. This was left standing for 30 minutes in the same environment. Subsequently, based on JIS Z 0237, using a tensile tester, was determined the 180° peel adhesion (N/20mm) at a tensile speed of 300 mm/min. Three measurements (i.e. N = 3) were taken and their arithmetic mean value was determined.
The results are shown in Table 2 along with the test results of the PSA sheet of Example 1.

[Table 2]

Table 2

| | | Ex. 1 | Ex. 2 | Ex. 3 |
|---|---|---|---|---|
| PSA layer | PSA <br> Thickness ($\mu$m) | A <br> 150 | A <br> 150 | A <br> 150 |
| Peel strength (N/20mm) | To-rough-surface (felt) Sz = 761 $\mu$m | 29 | - | - |
| | To-rough-surface (fasner's back) Sz = 599 $\mu$m | - | 32 | - |
| | To-rough-surface (nonwoven fabric) Sz = 276 $\mu$m | - | - | 35 |
| | To-smooth-surface (ABS plate) Sz=58 $\mu$m | 27 | 28 | 32 |
| Peel strength ratio | | 1.1 | 1.1 | 1.1 |
| Sz: maximum height | | | | |

As shown by the to-rough-surface peel strength of Examples 2 and 3 in Table 2, to the hook-and-loop fastener's backside as well as to the nonwoven fabric (both being sheet members having rough surfaces), the PSA sheet of Example 1 also showed a high peel strength at least comparable to the peel strength to felt. With respect to the adhesive members in each of which the second adhesive face of the PSA sheet of Example 1 was bonded to the rough surface of each sheet member, both showed high peel strength to the ABS plate and there was no observed adhesive transfer to the ABS plate when measured for the peel strength.

[Reference Signs List]

1 double-faced PSA sheet (PSAsheet)
11 first PSA layer
11A first adhesive face
12 second PSA layer
12A second adhesive face
15 fabric sheet
21 release liner
21B backside
50 sheet member
50A surface (rough surface)
100 adhesive member

**Claims**

1. A pressure-sensitive adhesive sheet comprising a fabric sheet and a pressure-sensitive adhesive layer laminated on the fabric sheet, wherein

   the pressure-sensitive adhesive layer comprises a base polymer and a tackifier resin,
   the base polymer is a block copolymer of a monovinyl-substituted aromatic compound and a conjugated diene compound,
   the tackifier resin comprises a tackifier resin having a softening point below 120 °C and a tackifier resin having a softening point of 120 °C or higher, wherein the softening point is measured as described in the description, and
   the pressure-sensitive adhesive layer has a thickness greater than 100 $\mu$m and less than 190 $\mu$m,
   wherein the fabric sheet has a thickness of 15 $\mu$m or greater and 50 $\mu$m or less as well as a bulk density of 0.25 g/cm$^3$ or higher and 0.50 g/cm$^3$ or lower.

2. The pressure-sensitive adhesive sheet according to Claim 1, formed as a double-faced pressure-sensitive adhesive sheet comprising a first pressure-sensitive adhesive layer that is the pressure-sensitive adhesive layer laminated on a first face of the fabric sheet and a second pressure-sensitive adhesive layer that is the pressure-sensitive adhesive layer laminated on a second face of the fabric sheet.

3. Use of the pressure-sensitive adhesive sheet according to Claim 1 or 2 for bonding a smooth surface having a surface roughness Sz less than 100 $\mu$m and a rough surface having a surface roughness Sz of 200 $\mu$m to 1000 $\mu$m together, wherein the surface roughness is determined as described in the description.

4. The pressure-sensitive adhesive sheet according to Claim 1or 2, wherein the fabric sheet has a bulk density of higher than 0.35 g/cm$^3$ and 0.50 g/cm$^3$ or lower.

5. The pressure-sensitive adhesive sheet according to any one of Claims 1, 2 and 4, the pressure-sensitive adhesive sheet having a thickness at least four times greater than the thickness of the fabric sheet.

6. The pressure-sensitive adhesive sheet according to any one of Claims 1, 2, 4 and 5, wherein the fabric sheet is constituted with a fibrous substance that is a natural fiber.

7. The pressure-sensitive adhesive sheet according to any one of Claims 1, 2 and 4 to 6, wherein the fabric sheet is a nonwoven fabric.

8. The pressure-sensitive adhesive sheet according to any one of Claims 1, 2 and 4 to 7, the pressure-sensitive adhesive sheet having a total thickness greater than 150 $\mu$m.

9. Use of the pressure-sensitive adhesive sheet according to any one of Claims 1, 2 and 4 to 8 for fixing a porous sheet to the circumference of a brush roll core of a vacuum cleaner.

10. Use of the pressure-sensitive adhesive sheet according to any one of Claims 1, 2 and 4 to 8 for fixing a hook-and-loop fastener's backside to an attachment target.

11. A method for producing the pressure-sensitive adhesive sheet according to any one of Claims 1, 2 and 4 to 8, the method comprising:

obtaining the fabric sheet,
forming the pressure-sensitive adhesive layer from a pressure-sensitive adhesive composition comprising the base polymer and the tackifier resin, and
laminating the pressure-sensitive adhesive layer onto the fabric sheet.

12. An adhesive member comprising the pressure-sensitive adhesive sheet according to any one of Claims 2 and 4 to 8 and a sheet member that has a rough surface having a surface roughness Sz of 200 $\mu$m to 1000 $\mu$m, wherein

the second pressure-sensitive adhesive layer of the pressure-sensitive adhesive sheet is bonded with the rough surface, wherein
the surface roughness is determined as described in the description.

13. The adhesive member according to Claim 12, wherein the rough surface of the sheet member is the backside of a hook member or loop member of a hook-and-loop fastener.

14. The adhesive member according to Claim 13, wherein the rough surface of the sheet member is the backside of a brush cloth to be fixed to the circumference of a brush roll core of a vacuum cleaner.

## Patentansprüche

1. Druckempfindliche Haftfolie, umfassend eine Gewebefolie und eine auf die Gewebefolie laminierte druckempfindliche Haftschicht, wobei die druckempfindliche Haftschicht ein Basispolymer und ein klebrigmachendes Harz umfasst,

das Basispolymer ein Blockcopolymer aus einer monovinylsubstituierten aromatischen Verbindung und einer konjugierten Dienverbindung ist,
das klebrigmachende Harz ein klebrigmachendes Harz mit einem Erweichungspunkt unter 120 °C und ein klebrigmachendes Harz mit einem Erweichungspunkt von 120 °C oder höher umfasst, wobei der Erweichungspunkt wie in der Beschreibung beschrieben gemessen wird, und
die druckempfindliche Haftschicht eine Dicke von mehr als 100 $\mu$m und weniger als 190 $\mu$m aufweist,
wobei die Gewebefolie eine Dicke von 15 $\mu$m oder mehr und 50 $\mu$m oder weniger sowie eine Schüttdichte von 0,25 g/cm$^3$ oder mehr und 0,50 g/cm$^3$ oder weniger aufweist.

2. Druckempfindliche Haftfolie nach Anspruch 1, die als doppelseitige druckempfindliche Haftfolie ausgebildet ist, umfassend eine erste druckempfindliche Haftschicht, die die druckempfindliche Haftschicht ist, die auf eine erste Seite der Gewebefolie laminiert ist, und eine zweite druckempfindliche Haftschicht, die die druckempfindliche Haftschicht ist, die auf eine zweite Seite der Gewebefolie laminiert ist.

3. Verwendung der druckempfindlichen Haftfolie nach Anspruch 1 oder 2 zum Verkleben einer glatten Oberfläche mit einer Oberflächenrauhigkeit Sz von weniger als 100 $\mu$m und einer rauen Oberfläche mit einer Oberflächenrauhigkeit Sz von 200 $\mu$m bis 1000 $\mu$m, wobei die Oberflächenrauhigkeit wie in der Beschreibung beschrieben bestimmt wird.

4. Druckempfindliche Haftfolie nach Anspruch 1 oder 2,
wobei die Gewebefolie eine Schüttdichte von mehr als 0,35 g/cm$^3$ und 0,50 g/cm$^3$ oder weniger aufweist.

5. Druckempfindliche Haftfolie nach einem der Ansprüche 1, 2 und 4,
wobei die druckempfindliche Haftfolie eine Dicke aufweist, die mindestens viermal so groß ist wie die Dicke der Gewebefolie.

6. Druckempfindliche Haftfolie nach einem der Ansprüche 1, 2, 4 und 5,
wobei die Gewebefolie aus einer faserigen Substanz aufgebaut ist, die eine Naturfaser ist.

7. Druckempfindliche Haftfolie nach einem der Ansprüche 1, 2 und 4 bis 6,
wobei die Gewebefolie ein Vliesstoff ist.

**8.** Druckempfindliche Haftfolie nach einem der Ansprüche 1, 2 und 4 bis 7,
wobei die druckempfindliche Haftfolie eine Gesamtdicke von mehr als 150 $\mu$m aufweist.

**9.** Verwendung der druckempfindlichen Haftfolie nach einem der Ansprüche 1, 2 und 4 bis 8 zur Befestigung einer porösen Folie am Umfang eines Bürstenwalzenkerns eines Staubsaugers.

**10.** Verwendung der druckempfindlichen Haftfolie nach einem der Ansprüche 1, 2 und 4 bis 8 zur Befestigung der Rückseite eines Klettverschlusses an einem Befestigungsziel.

**11.** Verfahren zur Herstellung der druckempfindlichen Haftfolie nach einem der Ansprüche 1, 2 und 4 bis 8, das Verfahren umfassend:

das Erhalten der Gewebefolie,
das Bilden der druckempfindlichen Haftschicht aus einer druckempfindlichen Haftzusammensetzung, umfassend das Basispolymer und das klebrigmachende Harz, und
das Laminieren der druckempfindlichen Haftschicht auf die Gewebefolie.

**12.** Haftelement, umfassend die druckempfindliche Haftfolie nach einem der Ansprüche 2 und 4 bis 8 und ein Folienelement, das eine raue Oberfläche mit einer Oberflächenrauhigkeit Sz von 200 $\mu$m bis 1000 $\mu$m aufweist, wobei

die zweite druckempfindliche Haftschicht der druckempfindlichen Haftfolie mit der rauen Oberfläche verklebt ist, wobei die Oberflächenrauhigkeit wie in der Beschreibung beschrieben bestimmt ist.

**13.** Haftelement nach Anspruch 12, wobei die raue Oberfläche des Folienelements die Rückseite eines Hakenelements oder Schlaufenelements eines Klettverschlusses ist.

**14.** Haftelement nach Anspruch 13, wobei die raue Oberfläche des Folienelements die Rückseite eines Bürstentuchs ist, das am Umfang eines Bürstenwalzenkerns eines Staubsaugers befestigt wird.

**Revendications**

**1.** Feuille adhésive sensible à la pression comprenant une feuille en tissu et une couche adhésive sensible à la pression stratifiée sur la feuille en tissu, dans laquelle

la couche adhésive sensible à la pression comprend un polymère de base et une résine tackifiante,
le polymère de base est un copolymère à blocs d'un composé aromatique substitué par du monovinyle et d'un composé de diène conjugué,
la résine tackifiante comprend une résine tackifiante ayant un point de ramollissement en dessous de 120 °C et une résine tackifiante ayant un point de ramollissement de 120 °C ou supérieur, dans laquelle le point de ramollissement est mesuré tel que décrit dans la description, et
la couche adhésive sensible à la pression a une épaisseur supérieure à 100 $\mu$m et inférieure à 190 $\mu$m, dans laquelle la feuille en tissu a une épaisseur de 15 $\mu$m ou supérieure et 50 $\mu$m ou moins ainsi qu'une masse volumique apparente de 0,25 g/cm$^3$ ou supérieure et 0,50 g/cm$^3$ ou inférieure.

**2.** Feuille adhésive sensible à la pression selon la revendication 1, formée en tant que feuille adhésive sensible à la pression double face comprenant une première couche adhésive sensible à la pression qui est la couche adhésive sensible à la pression stratifiée sur une première face de la feuille en tissu et une seconde couche adhésive sensible à la pression qui est la couche adhésive sensible à la pression stratifiée sur une seconde face de la feuille en tissu.

**3.** Utilisation de la feuille adhésive sensible à la pression selon la revendication 1 ou 2 pour assembler une surface lisse ayant une rugosité de surface Sz inférieure à 100 $\mu$m et une surface rugueuse ayant une rugosité de surface Sz de 200 $\mu$m à 1000 $\mu$m ensemble, dans laquelle la rugosité de surface est déterminée tel que décrit dans la description.

**4.** Feuille adhésive sensible à la pression selon la revendication 1 ou 2, dans laquelle la feuille en tissu a une masse volumique apparente supérieure à 0,35 g/cm$^3$ et de 0,50 g/cm$^3$ ou inférieure.

**5.** Feuille adhésive sensible à la pression selon l'une quelconque des revendications 1, 2 et 4, la feuille adhésive sensible à la pression ayant une épaisseur d'au moins quatre fois supérieure à l'épaisseur de la feuille en tissu.

6. Feuille adhésive sensible à la pression selon l'une quelconque des revendications 1, 2, 4 et 5, dans laquelle la feuille en tissu est constituée d'une substance fibreuse qui est une fibre naturelle.

7. Feuille adhésive sensible à la pression selon l'une quelconque des revendications 1, 2 et 4 à 6, dans laquelle la feuille en tissu est un tissu non tissé.

8. Feuille adhésive sensible à la pression selon l'une quelconque des revendications 1, 2 et 4 à 7, la feuille adhésive sensible à la pression ayant une épaisseur totale supérieure à 150 $\mu$m.

9. Utilisation de la feuille adhésive sensible à la pression selon l'une quelconque des revendications 1, 2 et 4 à 8 pour fixer une feuille poreuse à la circonférence d'un noyau de cylindre brosseur d'un aspirateur.

10. Utilisation de la feuille adhésive sensible à la pression selon l'une quelconque des revendications 1, 2 et 4 à 8 pour fixer le côté arrière d'une fermeture autoagrippante à une cible de connexion.

11. Procédé de production de la feuille adhésive sensible à la pression selon l'une quelconque des revendications 1, 2 et 4 à 8, le procédé comprenant :

   obtenir la feuille en tissu,
   former la couche adhésive sensible à la pression à partir d'une composition adhésive sensible à la pression comprenant le polymère de base et la résine tackifiante, et
   stratifier la couche adhésive sensible à la pression sur la feuille en tissu.

12. Élément adhésif comprenant la feuille adhésive sensible à la pression selon l'une quelconque des revendications 2 et 4 à 8 et un élément de feuille qui a une surface rugueuse ayant une rugosité de surface Sz de 200 $\mu$m à 1000 $\mu$m, dans lequel

   la seconde couche adhésive sensible à la pression de la feuille adhésive sensible à la pression est assemblée à la surface rugueuse, dans lequel
   la rugosité de surface est déterminée tel que décrit dans la description.

13. Élément adhésif selon la revendication 12, dans lequel la surface rugueuse de l'élément de feuille est le côté arrière d'un élément de crochet ou élément de boucle d'une fermeture autoagrippante.

14. Élément adhésif selon la revendication 13, dans lequel la surface rugueuse de l'élément de feuille est le côté arrière d'un chiffon pour brosse devant être fixé à la circonférence d'un noyau de cylindre brosseur d'un aspirateur.

[Fig. 1]

FIG.1

[Fig. 2]

FIG.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015078348 A
- EP 2913373 A1
- US 2014213716 A1
- JP 2013216852 A
- EP 2848665 A1

### Non-patent literature cited in the description

- **C. A. DAHLQUIST**. Adhesion : Fundamental and Practice. *McLaren & Sons*, 1966, 143